# EUROPÄISCHE PATENTSCHRIFT

(11) **EP 0 347 643 B1**
(45) Veröffentlichungstag und Bekanntmachung des Hinweises auf die Patenterteilung: **21.04.1993**
(21) Anmeldenummer: 89110263.4
(22) Anmeldetag: 07.06.1989
(51) Int. Cl.: A01C 17/00

(54) **Verfahren zum Ausbringen von Düngemitteln mittels eines Zentrifugaldüngerstreuers**
Method for distributing fertiliser by means of a broadcaster
Méthode pour distribuer des engrais par un épandeur centrifuge

(30) Priorität: 18.06.1988 DE 3820681; 04.10.1988 DE 3833638
(43) Veröffentlichungstag der Anmeldung: 27.12.1989
(60) Teilanmeldung: 92116362.2
(73) Patentinhaber: Amazonen-Werke H. Dreyer GmbH & Co. KG, D-49205 Hasbergen (DE)
(72) Erfinder: Dreyer, Heinz, Dipl.-Ing. Dr., D-4507 Hasbergen (DE)
(74) Vertreter: Grünecker, Kinkeldey, Stockmair & Schwanhäusser Anwaltssozietät

(56) Entgegenhaltungen:
- EP-A- 0 085 766
- EP-A- 0 104 622
- EP-A- 0 127 922
- DE-A- 1 457 850
- DE-B- 1 128 211
- FR-A- 2 242 016

## Beschreibung

Die Erfindung betrifft ein und Verfahren und einen Zentrifugaldüngerstreuer zum Ausbringen von Düngemitteln gemäß Oberbegriff des Patentanspruches 1 bzw. 5.

Ein Zentrifugaldüngerstreuer zur Durchführung des Verfahrens zum Ausbringen von Düngemitteln ist bereits durch die DE-PS 28 35 011 bekannt. Bei diesem Zentrifugaldüngerstreuer gelangen die sich im Vorratsbehälter befindlichen Düngemittelpartikel in genau einstellbaren Mengen, über die mittels Schieber in unterschiedlichen Öffnungsweiten ein- und verstellbaren Auslauföffnungen, zu den um aufrechte Achsen rotierenden und mit Wurfschaufeln versehenen Schleuderscheiben und werden von diesen in Breitverteilung abgeschleudert, so daß sich ein gleichmäßiges Streubild über die gesamte Streubreite des Düngerstreuers ergibt. Hierbei schleudert jede Schleuderscheibe die ihr zugeführten Düngemittelpartikel über einen bestimmten Streusektor ab, wobei sich die beiden einzelnen, symmetrischen Streusektoren derart im mittleren Bereich des Düngerstreuers überlappen, so daß sich über die gesamte Streubreite ein gleichmäßiges Streubild ergibt. Die linke Schleuderscheibe bestreut hierbei den Bereich jeweils links der in Fahrtrichtung weisenden Mittelachse des Schleuderdüngerstreuers und die rechte Schleuderscheibe den rechen Bereich. Durch die Rotation der mit den Wurfschaufeln bestückten Schleuderscheiben wird den von den Wurfschaufeln abgeschleuderten Düngemittelpartikeln kinetische Energie verliehen, die die Flugbahnen der Düngemittelpartikel bestimmt.

Die Schleuderscheiben werden bei diesem bekannten Zentrifugaldüngerstreuer derart gegenläufig angetrieben, daß ihre Drehrichtung auf der Rückseite des Düngerstreuers, also entgegen der Fahrtrichtung, auseinanderlaufen. Hierdurch ergibt sich für jede Schleuderscheibe ein Streusektor, der sich etwa von der Düngerstreuermittelachse bis in einen, in Fahrtrichtung gesehenen seitlich schräg nach vorn über den vorderen Begrenzungsrand des Vorratsbehälters des Düngerstreuers hinausragenden Bereich erstreckt. Dadurch, daß die Düngemittelpartikel von den Wurfschaufeln der Schleuderscheiben sowohl in einen Bereich, der sich jeweils seitlich schräg nach vorn über den Begrenzungsbereich des Düngerstreuers als auch weit bis hinter den Düngerstreuer erstreckt, abgeschleudert werden, ergeben sich in Fahrtrichtung gesehen gleichmäßige, aber tiefe, aufgefächerte Streusektoren, die eine große, unerwünschte Streutiefe des Streubildes in Fahrtrichtung aufweisen. Mit den immer größer werdenden Arbeitsbreiten der Schleuderdüngerstreuer vergrößern sich auch die Streutiefen dieser Düngerstreuer, da die Düngemittelpartikel über immer größere Bereiche abgeschleudert werden. Die großen, unerwünschten Streuciefen des Streubildes in Fahrtrichtung führen beispielsweise am Vorgewende einer zu bestreuenden Ackerfläche dazu, daß diese Bereiche nicht mit der gewünschten Düngermenge bestreut werden können, da ein exaktes Heranfahren bis an das Vorgewendeende oder aber auch ein exaktes Abfahren vom Vorgewendeende nicht möglich ist, da die Düngemittelpartikel in den von den Schleuderscheiben jeweils erzeugten Streusektoren bis weit vor und hinter den Begrenzungsbereich des Düngerstreuers abgeworfen werden. Der Schlepperfahrer muß also am Vorgewende abschätzen, wann er die Düngemittelzufuhr zu den Schleuderscheiben freigibt oder unterbricht, wenn er verhindern will, daß die Düngemittelpartikel nicht in ungewünschter Weise bis über den Feldrand des Vorgewendes abgeschleudert werden. Das Vorgewende läßt sich also nicht in der gewünschten Weise mit Dünger ausstreuen, so daß es in diesem Bereich zu einer Abweichung hinsichtlich der Düngergabe pro Flächeneinheit, in bezug auf die übrige, zu bestreuende Ackerfläche kommt, was zu Ertragsverlusten im Bereich des Vorgewendes führt.

Der Erfindung liegt nun die Aufgabe zugrunde, für Zentrifugaldüngerstreuer mit einfachen Maßnahmen einen schmalen, streifenförmigen Streubereich - auch - bei großen Arbeitsbreiten von 36 m und mehr zu schaffen.

Diese Aufgabe wird in erfindungemäßer Weise durch das im Anspruch 1 angegebene Verfahren und die im Anspruch 5 angegebene Vorrichtung gelöst.

Infolge dieser Maßnahmen werden die von den Wurfschaufeln der Schleuderscheiben in nach vorn gerichteter Richtung über den vorderen Begrenzungsbereich des Vorratsbehälters des Düngerstreuers abgeschleuderten Düngemittelpartikel derart von ihren ursprünglichen Wurfbahnen umgelenkt, daß sie jeweils seitlich des Düngerstreuers auf die Bodenoberfläche auftreffen und sich hindurch ein schmaler, "zusammengeschobener" streifenförmiger Streubereich, also ein Streubereich mit geringer Streutiefe des Streusektor in Fahrtrichtung, ergibt, wobei aber gleichzeitig die ursprüngliche Streubreite quer zur Fahrtrichtung unverändert beibehalten wird. Das Umlenken der Düngemittelpartikel von ihren ursprünglichen Flugbahnen erfolgt jeweils beidseitig des Düngerstreuers in symmetrischer Weise, in genau vorgegebene Flugrichtungen. Hierbei legen sich die abzulenkenden Düngerpartikel zunächst an, tangential zur Flugbahn angestellte Leitelemente an um dann von diesen Leitelementen in die gewünschte Flugrichtung quer zur Fahrtrichtung umgelenkt zu werden. Dieses bewirkt gleichzeitig eine Verringerung der den Düngemittelpartikeln von den Wurfschaufeln der rotierenden Schleuderscheiben verleihenden kinetischen Energie, welche durch die Reibung zwischen den Düngemittelpartikeln und den Leitelementen reduziert wird. Hierdurch wird erreicht, daß die Düngemittelpartikel derart weit abgeschleudert werden, daß die senkrecht zur Fahrtrichtung projezierte Wurfweite der Düngerpartikel zumindest annähernd erhalten bleibt, so daß die gewünschte Streubreite quer zur Fahrtrichtung unverändert bleibt. Des weiteren üben diese Leitelemente keinen Einfluß auf das Streuprofil der ausgestreuten Düngemittelpartikel aus, d.h. die Streugutverteilung über die Streubreite wird nicht beeinflußt, so daß die Ausstreumenge pro Flächeneinheit nicht verändert wird. Hierdurch lassen sich bereits ohne diese Leitelemente ausgelieferte Zentrifugaldüngerstreuer auf einfachste Weise mit den erfindungsgemäßen Leitelementen nachrüsten, ohne daß sonstige Veränderungen am Streuer vorgenommen werden müssen. Durch den Einsatz solcher Leitelemente läßt sich also die Streutiefe des Streubildes in Fahrtrichtung der von den Schleuderscheiben abgeschleuderten Düngemittelpartikel entscheidend reduzieren, so daß ein schmaler, in Fahrtrichtung "zusammengeschobener" Streustreifen mit wesentlich geringerer Streutiefe entsteht, welches sich besonders vorteilhaft beim Ausstreuen von Vorwendeflächen auswirkt. Von wesentlicher Bedeutung ist hierbei, daß sich die Streubildcharakteristik des von den Schleuderscheiben erzeugten Streubildes beim Einsatz der Leitelemente gegenüber dem Einsatz des Düngerstreuers ohne die Leitelemente nicht verändert, d.h. das Streubild weist in beiden Fällen jeweils die flachabfallenden Streuflanken auf.

Durch die DE-OS 34 20 669 ist ein gattungsgemäßer Düngerstreuer bekannt, der um wenigstens einen Teil des Umfanges seiner Schleuderscheiben, in dem Bereich, wo das auzustreuende Material von den Schleuderscheiben abgeschleudert wird, eine Leitvorrichtung aufweist. Dieser Düngerstreuer weist zwei um aufrechte Achsen rotierende und mit Wurfschaufeln besetzte Schleuderscheiben auf, mit denen die auszustreuenden Düngemittelpartikel über die zu bestreuende Fläche verteilt werden. Die Schleuderscheiben dieses Düngerstreuers werden derart im entgegengesetzten Drehsinn zueinander angetrieben, daß sich die von den Schleuderscheiben erzeugten Streufächer annähernd vollständig überlappen. Der Düngerstreuer ist an Teilen des Umfanges der Schleuderscheiben mit einer oder mehreren Leitvorrichtungen ausgestattet, die sich in ihrer Arbeitsstellung in der Bahn des ausgeworfenen Streumaterials befinden und dieses derart bremsen und umlenken, daß das Streugut auf einer Seite des Düngerstreuers über einen schmaleren Streifen ausgestreut wird, als auf der anderen Seite, also quer zur Fahrtrichtung die Streubreite auf der einen Seite der Mittelachse des Düngerstreuers verringert wird, was z.B. beim Streuen am Ackerrand zweckmäßig ist. Durch das Entfernen der Leitvorrichtung aus der Bahn des auszuwerfenden Streumaterials kann die normale, auf beiden Seiten der Mittelachse des Düngerstreuers gleiche Streubreite wiederhergestellt werden.

Diese, mit den jeweiligen Schleuderscheiben zusammenwirkende Leitvorrichtung ist als reine Grenzstreuvorrichtung ausgebildet, und ermöglicht das Bestreuen des Randbereiches eines Ackers, wobei zum Feldrand hin mit geringerer Streubreite gestreut wird, als zur Feldmitte. Mit dieser Leitvorrichtung soll ein Streubild mit zum Feldrand hin steil abfallender Streuflanke erzeugt werden, so daß sich auch zum Randbereich hin eine gleichmäßige Streudichte ergibt. Diese Leitvorrichtung dient also nur zum einseitigen reduzieren der Streubreite eines Schleuderdüngerstreuers, wobei quer zur Fahrtrichtung auf einer Seite des Düngerstreuers das Material mit geringerer Wurfweite als auf der anderen Seite abgeschleudert wird. Eine Beeinflussung der Streutiefe in Fahrtrichtung des von den Streusektoren der Schleuderscheiben erzeugten Streubildes findet nicht statt. Mittels dieser, mit den Schleuderscheiben zusammenwirkenden Leitvorrichtung wird also nur eine einseitige Streubreitenreduzierung des Düngerstreuers quer zur Fahrtrichtung erreicht, so daß ein exaktes Bestreuen von Feldrändern mit zum Feldrand hin reduzierter Streubreite, beispielsweise bei einem vorgegebenen Fahrgassensystem mit genau festgelegtem Abstand für die Fahrspuren des den Düngerstreuer transportierenden Ackerschleppers, ermöglicht wird.

Aus der EPA-A-104 622 ist es bekannt, den Streuwinkelbereich durch vertikale Leitbleche, die in Umfangsrichtung der Schleuderscheiben verlaufen, zu verändern. Dabei ändert sich aber auch die Streubreite.

Des weiteren ist durch die DE-OS 34 20 617 ein Düngerstreuer bekannt, der mit einer Schwenkvorrichtung ausgestattet ist. Mittels dieser Schwenkvorrichtung sind die um aufrechte Achsen rotierend angetriebenen Schleuderscheiben quer zur Fahrtrichtung des Düngerstreuers schräg zum Boden anstellbar, um eine einseitige Streubreitenreduzierung quer zur Fahrtrichtung herbeizuführen. Hierbei weisen die beiden Schleuderscheiben durch die Schrägstellung des gesamten Streuers dann eine unterschiedliche Höhenlage zueinander auf, so daß die Schleuderscheiben die Düngemittelpartikel mit unterschiedlichen Wurfweiten quer zur Fahrtrichtung abschleudern. Durch die Schrägstellung des Düngerstreuers sollen die seitlichen Ränder einer zu bestreuenden Ackerfläche mit einseitig geringerer Streubreite bestreut werden. Bei diesem Düngerstreuer soll, aus den gleichen Gründen wie bei dem bekannten Düngerstreuer gemäß der DE-OS 34 20 669, eine einseitige Streubreitenbegrenzung quer zur Fahrtrichtung herbeigeführt werden. Die Düngemittelpartikel werden also sowohl beim Düngerstreuer gemäß der DE-OS 34 20 669, als auch beim Streuer gemäß der DE-OS 34 20 617 in Fahrtrichtung gesehen bis weit hinter den Düngerstreuer abgeschleudert, so daß ein Streubild mit in Fahrtrichtung großer Streutiefe entsteht, wodurch auch bei diesen Streuern ein exaktes Ausstreuen der Vorgewendeflächen, die sich jeweils in etwa senkrecht zu den Feldrändern befinden und in deren Bereich der Fahrtrichtungswechsel beim Düngerstreuen durchgeführt wird, nicht möglich ist.

Weiterhin ist durch die DE-PS 11 03 064 ein Düngerstreuer bekannt, bei dem das in horizontaler Richtung über ein Schleuderrad auseinandergeworfene Streugut auf eine geneigt zur vertikalen angeordnete Prallwand auftrifft. Diese Prallwand umschließt das Schleuderrad allseitig in Form einer mit ihrer Längsachse im wesentlichen quer zur Fahrtrichtung angeordneten Ellipse und ist auf ihrer Innenseite mit sich in lotrechter Richtung erstreckenden Rippen versehen und dient als Windschutzhaube. Die Wand soll zudem die Flugbahn des Streugutes begrenzen, da die Streugüter über einen Streubereich von 360° von dem Schleuderrad abgeschleudert werden und eine gleichmäßige Düngerverteilung über eine bestimmte Streubreite ermöglichen. Eine Begrenzung der Flugbahnen wird dadurch erforderlich, da gleichzeitig pulverförmige und gekörnte Streugüter ausgebracht werden sollen und die beiden Streugüter unterschiedliche Streuguteigenschaften besitzen, so daß diese Streugüter unterschiedlich breit ausgestreut werden, wobei das gekörnte Streugut weiter als das pulverförmige Streugut von dem Schleuderrad abgeworfen wird. Pulverförmige Streugüter lassen sich nur über eine geringe Streubreite mit Schleuderrädern verteilen, so daß sich mit diesem Düngerstreuer nur sehr geringe Arbeitsbreiten erzielen lassen, da sowohl pulverförmige als auch gekörnte Streugüter mittels dieses Streuers ausgebracht werden sollen. Durch das Bestücken der Prallwand mit Rippen und die spezielle Ausbildung der Prallwand soll hier eine Streuvorrichtung geschaffen werden, die die Sicherstellung einer gleichmäßigen Verteilung des Streugutes jeglicher Struktur gewährleistet.

Die Leitelemente können auf einfachste Weise am Rahmen des Düngerstreuers befestigt werden, wobei diese Leitelemente nur die Streutiefe der Streusektoren in Fahrtrichtung beeinflussen, alle anderen Parameter zur Herstellung einer gleichmäßigen Düngerverteilung über die gesamte Streubreite werden nicht verändert. Hierdurch ist es möglich, den Streuer sowohl ohne, als auch mit diesen Leitelementen einzusetzen, ohne spezielle Einstellungen am Düngerstreuer vornehmen zu müssen. Die Leitelemente führen weder zu einer Veränderung der gewünschten Arbeitsbreite quer zur Fahrtrichtung noch zu einer Veränderung der Streubildcharakteristik des Düngerstreuers, sondern nur zu einer Reduzierung der Streutiefe der Streusektoren in Fahrtrichtung.

Die Ausbildung der Leitflächen der Leitelemente ist erfindungsgemäß so ausgeführt, daß die Leitflächen in ihrem vorderen, den Schleuderscheiben zugewandten Bereich zumindest etwa tangential zur Abwurfrichtung der Düngerpartikel verlaufen und über die sich anschließende Krümmung etwa in senkrechter Richtung zur Fahrtrichtung übergehen, wobei mehrere Leitflächen in Fahrtrichtung gesehen in einem Abstand zueinander angeordnet und die Leitflächen durch einen Rahmen zu einem Leitkasten zusammengefaßt sind.

Weiterhin ist erfindungsgemäß vorgesehen, daß im hinteren sowie seitlichen hinteren Bereich der Schleuderscheiben jeweils aufrechte Leitflächen derart angeordnet sind, daß sie den seitlich schräg nach hinten, in Fahrtrichtung gesehen, abgeschleuderten Dünger in eine quer oder zumindest annähernd senkrecht zur Fahrtrichtung liegende Richtung seitlich des Streuers umlenken. Hierdurch findet eine weitere Reduzierung der Streutiefe der Streusektoren in Fahrtrichtung statt, indem die Düngemittelpartikel in diesem Bereich nicht mehr so weit nach hinten abgeschleudert werden, sondern in eine quer zur Fahrtrichtung liegende Richtung umgelenkt werden. Die große Streutiefe der in Fahrtrichtung abgeschleuderten Düngemittelpartikel wird hierdurch erheblich reduziert, so daß sich ein schmaler, streifenförmiger Streustreifen der Düngemittelpartikel ergibt.

Um die Streutiefe der Streusektoren in Fahrtrichtung noch weiter zu reduzieren, ist erfindungsgemäß vorgesehen, daß sich hinter den Schleuderscheiben ein liegend angeordnetes Leitblech befindet, welches sich auf der den Schleuderscheiben zugewandten Seite zunächst etwa tangential an die Wurfbahnen der Düngepartikel anlegt und dann nach unten gekrümmt ist und die Düngemittelpartikel seitlich nach unten ablenkt. Hierbei ist dann weiter erfindungsgemäß vorgesehen, daß auf der Unterseite des Leitbleches aufrecht stehende Leitflächen angeordnet sind, daß diese Leitflächen sich zunächst auf ihrer den Schleuderscheiben zugewandten Seiten tangential an die Wurfbahnen der Düngerpartikel anlegen und anschließend in seitlicher Richtung gekrümmt sind. Hierdurch wird den von den Wurfelementen der Schleuderscheiben in Fahrtrichtung nach hinten abgeschleuderten Düngemittelpartikeln beim Passieren dieser Leitelemente, durch die bei Umlenkung der Düngemittel hervorgerufene Reibung zwischen den Düngemittelpartikeln und den Leitelementen, Bewegungsenergie entzogen, wodurch die Flugbahnen der nach hinten abgeschleuderten Düngemittelpartikel verkürzt und so die Streutiefe der Streusektoren in Fahrtrichtung verringert wird.

Durch die DE-OS 23 44 346 ist bereits ein Schleuderdüngerstreuer bekannt, der auf der entgegen der Streurichtung gelegenen Seite der Schleuderscheiben je einen Leitschirm und auf der in Streurichtung gelegenen Seite der Schleuderscheiben mit einem größeren Abstand von diesen eine Abschirmeinrichtung aufweist. Mit diesen Bauteilen soll eine exakte Begrenzung der jeweiligen Streubahn auf eine bestimmte Streubreite quer zur Fahrtrichtung erreicht werden, wobei die von den Schleuderscheiben erzeugten Streufächer oder Streusektoren derart zu regulieren sind, daß sie genau die Abschirmeinrichtung in ihrer vollen Ausdehnung treffen. Hierdurch ist es möglich, mit einem Schleuderdüngerstreuer quer zur Fahrtrichtung schmale Ackerstreifen, wie beispielsweise Obstkulturen, zu düngen.

Damit sich der mit den erfindungsgemäßen Leitelementen ausgerüstete Düngerstreuer sowohl für die Normal- als auch für die Spätdüngung von Pflanzen einsetzen läßt, ist erfindungsgemäß vorgesehen, daß die aufrechten Leitelemente um eine Gelenkachse höhenverschwenkbar sind. Hierdurch ist es auch möglich, bei der Spätdüngung, bei der die Düngemittelpartikel mit einem einstellbaren, angehobenen Abwurfwinkel die Schleuderscheiben verlassen, sich die Vorteile hinsichtlich der Streutiefenreduzierung der Streusektoren eines Düngerstreuers, in Fahrtrichtung zu Nutze zu machen. Der gleiche Effekt läßt sich auch dadurch erzielen, wenn die aufrechten Leitelemente von den Schleuderscheiben aus gesehen eine zunehmende Höhe aufweisen.

Sind die Leitflächen der an den Düngerstreuer angeordneten Leitelemente derart ausgebildet, daß sie die zulässigen Ausmaße für den Transport auf öffentlichen Straßen und Wegen in ihrer Arbeitsstellung überschreiten, sind die Leitflächen in eine Transportstellung bringbar.

Damit nun gar keine Düngemittelpartikel mehr über den vorderen Begrenzungsbereich des Vorratsbehälters des Düngerstreuers abgeschleudert werden, ist erfindungsgemaß vorgesehen, daß die vorderste Leitfläche sich unmittelbar an den vorderen, die Schleuderscheiben nach vorn abschirmenden Leitschirm anschließt.

Eine Reduzierung der Streutiefe der Streusektoren, in Fahrtrichtung läßt sich auch dadurch erreichen, daß der Schleuderdüngerstreuer bzw. die Scheiben und/oder deren Drehachse oder Wurfschaufeln einstellbar oder eingestellt sind, daß die Düngemittelpartikel zunächst etwa horizontal abgeworfen werden, wobei die Schleuderscheibenachsen nach unten geneigt sind. Hierdurch wird die Streuweite der Düngemittelpartikel in den Bereich hinter den Düngerstreuer begrenzt, indem die Flugkurve der Düngemittelpartikel verkürzt wird. Das Gleiche läßt sich auch erreichen, wenn der gesamte Streuer nach hinten geneigt ist.

Zur Anpassung an unterschiedliche Einsatzverhältnisse und unterschiedliche Streuguteigenschaften der auszustreuenden Düngemittel ist erfindungsgemäß vorgesehen, daß die Leitelemente verschwenkbare Flügelteile besitzen.

Bei Düngerstreuern mit rotierenden Schleuderscheiben, die in Fahrtrichtung drehen, d.h. die in Fahrtrichtung auseinanderdrehen, läßt sich die Streutiefe der Streusektoren in Fahrtrichtung ebenfalls zu einem schmalen streifenförmigen Streubereich zusammenführen, indem in Fahrtrichtung gesehen, im hinteren Bereich der Schleuderscheiben jeweils aufrechte Leitflächen spiegelbildlich gleich im Bereich der Mittelachse des Schleuderdüngerstreuers angeordnet sind. Hierdurch werden die Flugbahnen der nach hinten abgeschleuderten Düngemittelpartikel ebenfalls erheblich reduziert, wodurch sich in Fahrtrichtung Streusektoren geringerer Streutiefe ergeben.

In einer Ausführungsform ist in erfindungsgemäßer Weise vorgesehen, daß ein am Rahme und am Vorratsbehälter des Düngerstreuers befestigter Schutzbügel angeordnet ist, welcher einen größeren Umfang als der Rotationsdurchmesser der Schleuderscheiben aufweist. Dieser Bügel dient als Unfallschutzelement und soll verhindern, das Personal von den rotierenden Wurfschaufeln erfaßt und verletzt werden.

In einer besonders bevorzugten Ausführungsform ist in erfindungsgemäßer Weise vorgesehen, daß an dem Unfallschutzelement der Leitkasten befestigt ist. Infolge dieser Maßnahme läßt sich der Leitkasten auf einfachste Weise an dem Zentrifugaldüngerstreuer befestigen.

In einer weiteren bevorzugten Ausführungsform ist erfindungsgemäß vorgesehen, daß an dem Unfallschutzelement und/oder einem der Leitkästen, vorzugsweise an dem linken Leitkasten, der Behälter zum Auffangen der abgedrehten Düngermenge angeordnet ist. Hierdurch ist gewährleistet, daß der Behälter zum Auffangen der abgedrehten Düngermegen während einer Abdrehprobe ständig mit dem Düngerstreuer mitgeführt wird, so daß zu jeder Zeit und jederorts eine Kontrolle der Einstellung der Dosierorgane durch eine Abdrehprobe durchgeführt werden kann.

Zur Schaffung einer besonders einfachen, platzsparenden und praktischen Befestigung des Schutzbügels an dem Zentrifugaldüngerstreuer ist erfindungsgemäß vorgesehen, daß auf der Rückseite des Streuers zwischen dem Rahmen oder Vorratsbehälter und dem Schutzbügelhalterungen angeordnet sind, und daß an diesen Halterungen die Rückleuchten angeordnet sind.

Damit die Leitkästen vor Beschädigungen geschützt werden, ist jeweils ein Rammschutz in Fahrtrichtung vor den Leitkästen befestigt.

Weitere Einzelheiten der Erfindung sind den übrigen Unteransprüchen, der Beispielsbeschreibung und den Zeichnungen zu entnehmen. Hierbei zeigt
- Fig. 1: den in erfindungsgemäßer Weise ausgebildeten Schleuderdüngerstreuer in der Ansicht von hinten,
- Fig. 2: den Schleuderdüngerstreuer gemäß Fig. 1 in der Ansicht II - II,
- Fig. 3: den Schleuderdüngerstreuer gemäß Fig. 2 mit den jeweiligen Abstreubereichen,
- Fig. 4: einen weiteren, in erfindungsgemäßer Weise ausgebildeten Schleuderdüngerstreuer mit hinter den Schleuderscheiben liegend angeordnetem Leitblech, in der Ansicht von hinten,

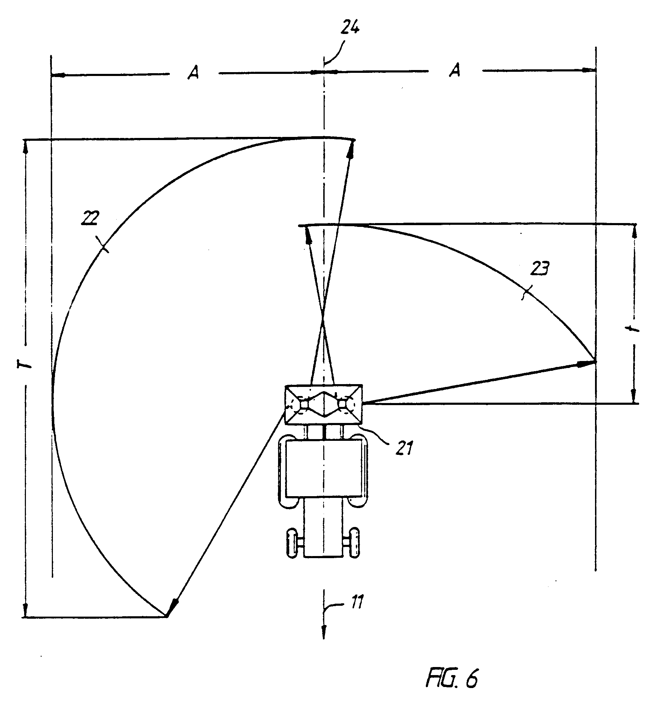

- Fig. 5: der Schleuderdüngerstreuer gemäß Fig. 4 in der Ansicht V - V,
- Fig. 6: die schematische Darstellung der von den einzelnen Schleuderscheiben des Schleuderdüngerstreuers erzeugten Streusektoren, wobei der einen Schleuderscheibe das erfindungsgemäße Leitelement zugeordnet ist und die andere Schleuderscheibe die Düngemittel in herkömmlicher Weise abschleudert, in der Draufsicht und
- Fig. 7: den mit einer Unfallschutzvorrichtung ausgestatteten Schleuderdüngerstreuer in der Ansicht von hinten,
- Fig. 8: eine schematische Darstellung der von Schleuderscheiben des Schleuderdüngerstreuers gemäß Fig. 8 erzeugten Streusektoren, wobei die Düngemittelpartikel bis vor den vorderen Begrenzungsbereich des Vorratsbehälters abgeschleudert werden,
- Fig. 9: das Streubild der von den Schleuderscheiben des Düngerstreuers gemäß Fig. 7 abgeschleuderten Düngemittelpartikel,
- Fig. 10: der Schleuderdüngerstreuer gemäß Fig. 7 mit den spiegelbildlich auf beiden Seiten des Streuers, im äußeren Streubereich der Schleuderscheiben, angeordneten Leitelementen,
- Fig. 11: schematische Darstellung der von den Schleuderscheiben des Schleuderdüngerstreuers gemäß Fig. 10 erzeugten Streusektoren, wobei die Düngemittelpartikel nicht über den vorderen Begrenzungsbereich des Vorratsbehälters abgeschleudert werden,

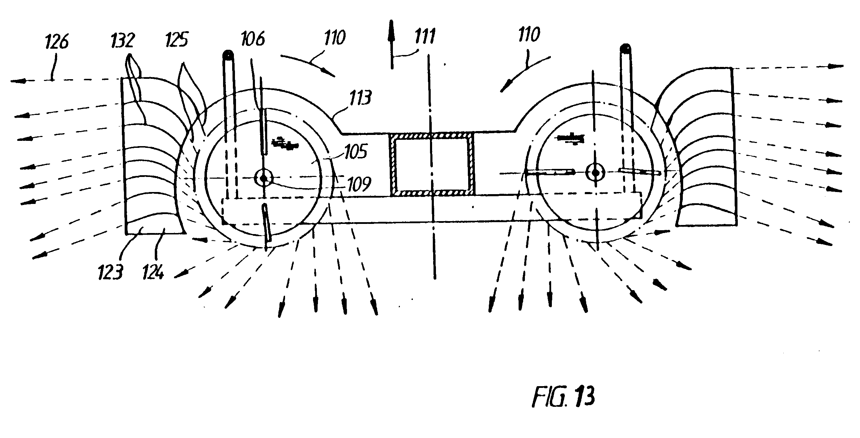

- Fig. 12: das Streubild der von den Schleuderscheiben des Düngerstreuers gemäß Fig. 10 abgeschleuderten Düngemittelpartikel,
- Fig. 13: der Schleuderdüngerstreuer gemäß Fig. 10 in der Ansicht XIIII - XIII,
- Fig. 14: ein weiterer, in erfindungsgemäßer Weise ausgebildeter Schleuderdüngerstreuer, wobei die Leitelemente jeweils schräg nach oben, entsprechend des Abwurfwinkels der Düngemittelpartikel angestellt sind,
- Fig. 15: die zu dem Leitkasten zusammengefaßten Leitflächen,
- Fig. 16: der Schleuderdüngerstreuer gemäß Fig. 10 in der Seitenansicht, wobei die Flugbahnen der nach hinten abgeschleuderten Düngemittelpartikel, die relativ weit nach hinten abgeschleudert werden, dargestellt sind,

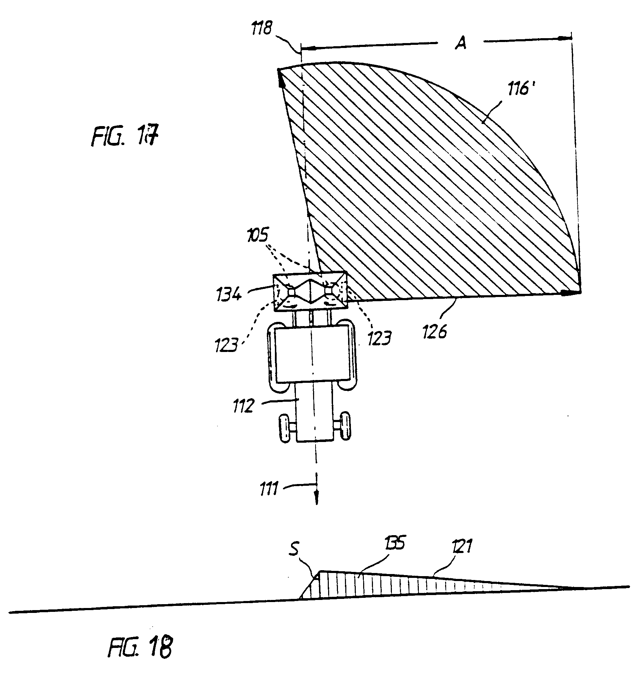

- Fig. 17: der Schleuderdüngerstreuer gemäß Fig. 10, wobei die Düngerzufuhr zur rechten Schleuderscheibe unterbrochen ist,
- Fig. 18: das von der Schleuderscheibe des Schleuderdüngerstreuers gemäß Fig. 17 erzeugte Streubild,
- Fig. 19: der Schleuderdüngerstreuer gemäß Fig. 10 in der Seitenansicht, wobei der Schleuderdüngerstreuer nach hinten geneigt ist, wodurch sich eine nach hinten reduzierte Wurfweite der von den Schleuderscheiben abgeschleuderten Düngemittelpartikel ergibt,
- Fig. 20: schematische Darstellung der von den Schleuderscheiben des geneigten Schleuderdüngerstreuers, gemäß Fig. 19, erzeugten Streusektoren,
- Fig. 21: das Streubild der von den Schleuderscheiben des Düngerstreuers gemäß Fig. 20 abgeschleuderten Düngemittelpartikel,
- Fig. 22: schematische Darstellung der von Schleuderscheiben eines Schleuderdüngerstreuers erzeugten Streusektoren, wobei sich die von den Schleuderscheiben erzeugten Streufächer oder Streusektoren annähernd vollständig überlappen,
- Fig. 23: das Streubild der von den Schleuderscheiben des Düngerstreuers gemäß Fig. 22 abgeschleuderten Düngemittelpartikel,
- Fig. 24: der Schleuderdüngerstreuer gemäß Fig. 22, wobei die Düngerzuführ zur rechten Schleuderscheibe unterbrochen ist, mit dem von der linken Schleuderscheibe erzeugten Streusektor,
- Fig. 25: das von der Schleuderscheibe des Schleuderdüngerstreuers gemäß Fig. 24 erzeugte Streubild,

Der Schleuderdüngerstreuer weist den Vorratsbehälter 1, den Rahmen 2 und die unterhalb der beiden trichterförmigen Behälterteile 3 und 4 rotierend angetriebenen Schleuderscheiben 5, auf denen die Wurfschaufeln 6 angeordnet sind, auf. Den Schleuderscheiben 5 werden die sich im Varratsbehälter 1 befindlichen Düngemittel über die in den Bodenplatten 7 angeordneten Auslauföffnungen, welche jeweils mittels der Schieber 8 in unterschiedlichen Öffnungsweiten einstellbar und verschließbar sind, zugeführt. Die den, um die aufrechten Achsen 9 rotierend angetriebenen Schleuderscheiben 5 zugeführten Düngemittelpartikel werden von den Wurfschaufeln 6 in Breitverteilung über die zu bestreuende Fläche ausgestreut. Die Schleuderscheiben 5 werden jeweils mit einer Drehrichtung in Pfeilrichtung 10 angetrieben, wobei sie entgegen der Fahrtrichtung 11 auf der Rückseite des Schleuderdüngerstreuers auseinanderdrehen. Die Düngemittelpartikel werden von den Wurfschaufeln 6 in Richtung der gestrichelten Linien 12 von den Schleuderscheiben 5 abgeschleudert, wobei die von den Wurfschaufeln 6 seitlich schräg nach vorn abgeschleuderten Düngemittelpartikel auf die einzelnen Leitflächen 13, der sich auf der äußeren Seite seitlich der um die aufrechten Achsen 9 rotierenden Schleuderscheiben 5 befindlichen Leitelemente 14 auftreffen und quer zu der in Fahrtrichtung 11 liegenden Richtung 15 seitlich des Streuers umgelenkt werden. Die jeweils rechts und links des Schleuderdüngerstreuers angeordneten Leitelemente 14 sind spiegelbildlich gleich ausgebildet, wobei die einzelnen Leitflächen 13 in ihrem vorderen, den Schleuderscheiben 5 zugewandten Bereich zunächst etwa tangential zur Abwurfrichtung der Düngemittelpartikel verlaufen und über die sich anschließende Krümmung quer zur Fahrtrichtung 11 umgelenkt werden. Die beiden Schleuderscheiben 5 erzeugen genau symmetrische Streusektoren jeweils gleicher Streubreite quer zur Fahrtrichtung 11. Die einzelnen Leitflächen 13 sind durch den Rahmen 16 und die Verstärkungsstreben 17 zu einem Leitkasten 18 zusammengefaßt. Die vorderste Leitfläche 19 schließt unmittelbar an dem vorderen, die Schleuderscheiben 5 nach vorn abschirmenden Leitschirm 20 an. Die aufrechten Leitflächen 13 sind derart ausgebildet, daß sie von den Schleuderscheiben 5 aus gesehen eine zunehmende Höhe aufweisen, so daß die Düngemittel auch bei zur Spätdüngung hochgeschwenkten Wurfschaufeln 6 noch in der bereits beschriebenen Weise umgelenkt werden.

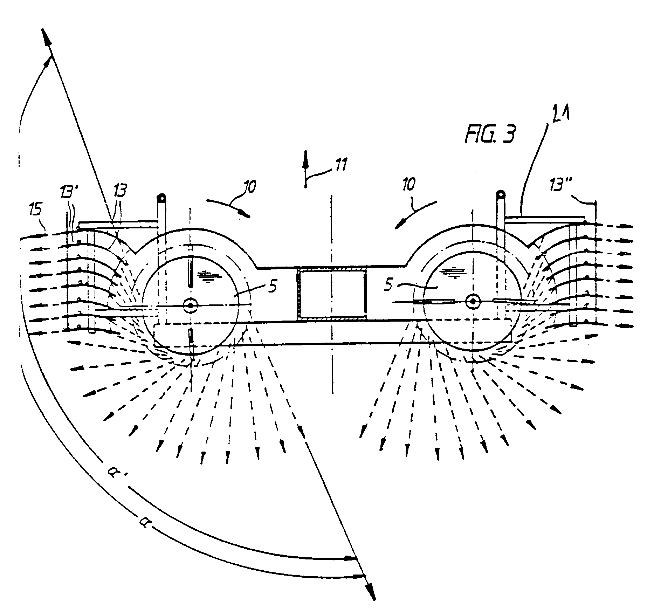

Die Fig. 3 zeigt den Abstreubereich 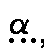 , über welchen die Düngemittelpartikel ohne den Einsatz der Leitelemente 14 bei den sich in der Praxis befindlichen Düngerstreuern abgeschleudert werden. Hierbei werden die Düngemittelpartikel jeweils von den Schleuderscheiben 5 bis in einen Bereich seitlich schräg nach vorn in Fahrtrichtung gesehen und über den vorderen Begrenzungsbereich 21 des Düngerstreuers abgeschleudert. Die Schleuderscheiben 5 schleudern die Düngemittelpartikel also in einen Bereich bis weit hinter den Schleuderdüngerstreuer und in einen Bereich der sich seitlich schräg nach vorn in Fahrtrichtung 11 gesehen, bis über den vorderen Begrenzungsbereich 21 des Düngerstreuers erstreckt. Hierbei erzeugt die Schleuderscheibe dann den Streusektor 22 mit der in Fahrtrichtung 11 gesehenen großen Streutiefe T. Durch den Einsatz der seitlich neben den Schleuderscheiben 5 angeordneten, aus den einzelnen Leitflächen 13 bestehenden Leitelemente 14 werden die seitlich schräg nach vorn über den vorderen Begrenzungsbereich 21 des Schleuderdüngerstreuers abgeschleuderten Düngemittelpartikel in eine quer zur Fahrtrichtung 11 liegenden Richtung 15 seitlich des Streuers umgelenkt, wobei sich der Abstreubereich 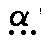 ' ergibt. Es werden also keine Düngemittelpartikel mehr über den vorderen Begrenzungsbereich 21 des Schleuderdüngerstreuers abgeschleudert. Wird nun der gesamte Schleuderdüngerstreuer derart nach hinten verschwenkt, daß die Schleuderscheibenachsen 9 nach unten geneigt sind, entsteht der Streusektor 23 welcher die Streutiefe t in Fahrtrichtung aufweist. Durch den Einsatz dieser Leitelemente 14, jeweils rechts und links des Schleuderdüngerstreuers, wird von jeder Schleuderscheibe 5 ein Streusektor 23 erzeugt, die sich genau spiegelbildlich zur Fahrzeuglängsachse 24 befinden. Das Besondere hierbei ist, daß beim Einsatz dieser Leitelemente 14 sich nur die Streutiefe t in Fahrtrichtung ändert, aber die Gesamtarbeitsbreite des Schleuderdüngerstreuers welche 2 A beträgt, unverändert beibehalten wird. Durch die Erzeugung der Streusektoren 23 lassen sich nun schmale, streifenförmige Streubereiche, ähnlich wie sie bei Pneumatikdüngerstreuern bekannt sind, auch mit Zentrifugaldüngerstreuer erreichen. Um sich nun noch besser speziellen Einsatzverhältnissen anpassen zu können, können die Leitelemente noch mit verschwenkbaren Flügelteilen 13' ausgerüstet sein, welche sich gemeinsam mit der Verstelleinrichtung 13'' verschwenken lassen.

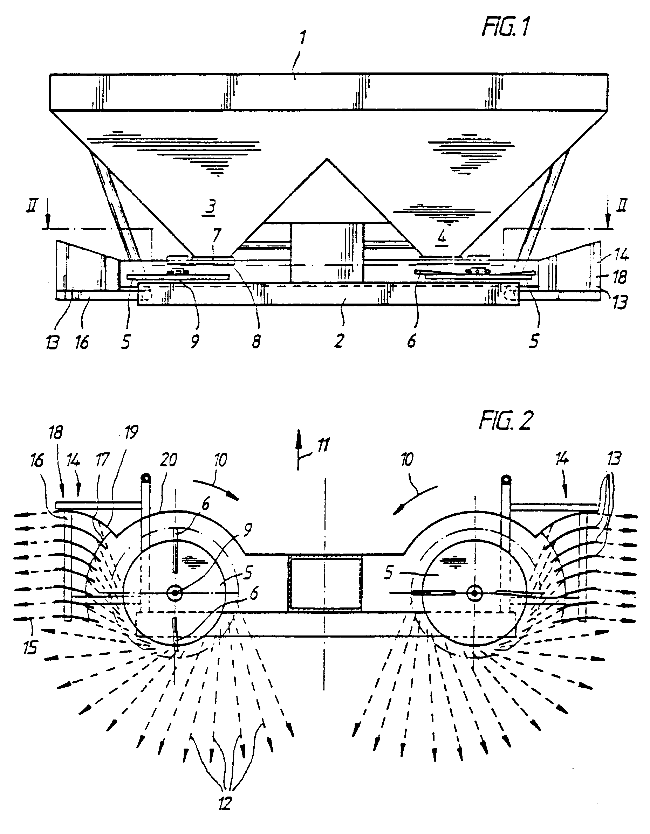

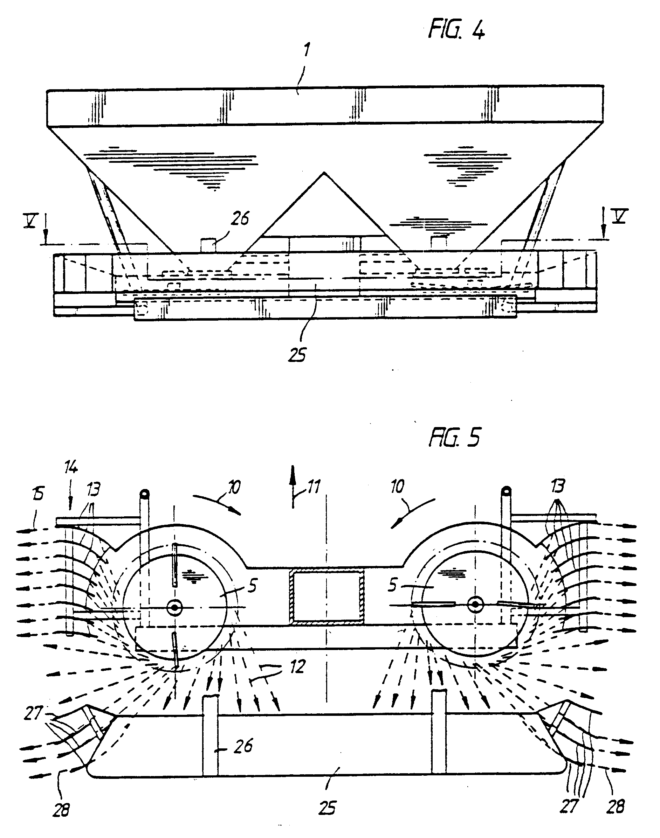

Die Fig. 4 zeigt einen Schleuderdüngerstreuer, der sich nur durch die Anordnung eines liegend angeordneten Leitbleches 25 hinter den Schleuderscheiben 5 des Schleuderdüngerstreuers, von dem Schleuderdüngerstreuer gemäß Fig. 1 unterscheidet. Mittels der Halterohre 26 ist dieses Leitblech 25 an dem Vorratsbehälter 1 befestigt. In seinem seitlichen Bereich weist das Leitblech 25 jeweils aufrechte Leitflächen 27 auf. Die von den Wurfschaufeln 6 der Schleuderscheiben 5 in Richtung der gestrichelten Linien 12 abgeschleuderten Düngemittelpartikel treffen im hinteren Bereich der Schleuderscheiben 5 auf das Leitblech 25, welches sich auf der den Schleuderscheiben 5 zugewandten Seite zunächst etwa tangential an die Wurfbahn der Düngemittelpartikel anlegt und dann nach unten gekrümmt ist und die Düngemittelpartikel nach unten ablenkt. Die im seitlichen hinteren Bereich von den Wurfschaufeln 6 abgeschleuderten Düngemittelpartikel werden von den Leitflächen 27 in eine quer zur Fahrtrichtung 11 liegende Richtung 28 umgelenkt. Die seitlich schräg nach vorn in Fahrtrichtung 11 von den Wurfschaufeln 6 der Schleuderscheiben 5 abgeschleuderten Düngemittelpartikel werden von den seitlich der Schleuderscheiben 5 jeweils angeordneten Leitelemente 14 in die quer zur Fahrtrichtung 11 liegende Richtung 15 seitlich des Streuers umgelenkt. Dadurch, daß die von den Schleuderscheiben 5 abgeschleuderten Düngemittelpartikel entweder von dem Leitblech 25, den Leitflächen 27 oder den Leitflächen 13 der Leitelemente 14 umgelenkt werden, wird den Düngemittelpartikeln die von den Wurfschaufeln 6 der Schleuderscheiben 5 während der Rotation der Schleuderscheiben 5 verliehene kinetische Energie durch die Reibung der Düngemittelpartikel an den jeweiligen Bauteilen 25, 27, 14 entzogen, so daß die Flugkurve der Düngemittelpartikel reduziert wird und die einzelnen Schleuderscheiben 5 jeweils einen Streusektor 23 gemäß Fig. 6 erzeugen. Dieses Streusektoren 23 sind wiederum symmetrisch zur Fahrzeugslängsachse 24 ausgebildet und weisen die Streutiefe t in Fahrtrichtung 11 auf.

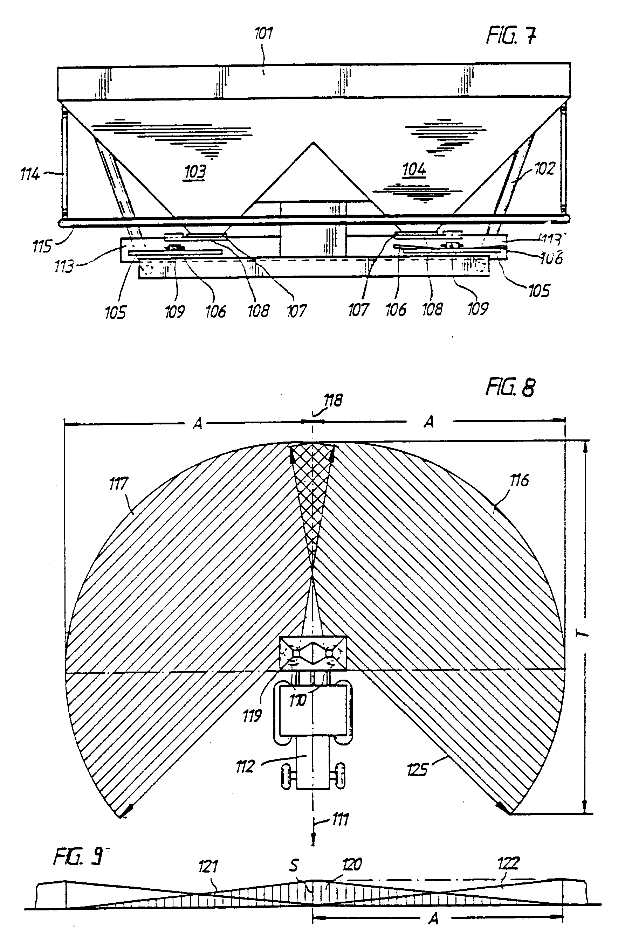

Der Schleuderdüngerstreuer gemäß Fig. 7 weist den Vorratsbehälter 101, den Rahmen 102 und die unterhalb der beiden trichterförmigen Behälterteile 103 und 104 rotierend angetriebenen Schleuderscheiben 105, auf denen die Wurfschaufeln 106 angeordnet sind, auf. Den Schleuderscheiben 105 werden die sich im Vorratsbehälter 101 befindlichen Düngemittel über die in den Bodenplatten 107 angeordneten Auslauföffnungen, welche jeweils mittels der Schieber 108 in unterschiedlichen Öffnungsweiten ein- und verstellbar sind, zugeführt. Die den um die aufrechten Achsen 109 rotierend angetriebenen Schleuderscheiben 105 Zugeführten Düngemittelpartikel werden von den Wurfschaufeln 106 in Breitverteilung über die zu bestreuende Fläche ausgestreut. Die Schleuderscheiben 105 werden jeweils mit einer Drehrichtung in Pfeilrichtung 110 angetrieben, wobei sie entgegen der Fahrtrichtung 111 auf der Rückseite des Schleuderdüngerstreuers auseinanderdrehen. Damit die Düngemittelpartikel nicht in ungewünschter Weise von den Wurfschaufeln 106 der Schleuderscheiben 105 in Richtung auf den den Schleuderdüngerstreuer transportierenden Ackerschlepper 112 abgeschleudert werden, weisen die Schleuderscheibe 105 in ihrem vorderen, d.h. in Fahrtrichtung 111 weisenden Bereich jeweils den die Schleuderscheiben 105 nach vorn abschirmenden Leitschirm 113 auf. Über die Haltestreben 114 ist das den Schleuderdüngerstreuer umlaufende Unfallschutzelement, welches als Schutzbügel 115 ausgebildet ist, am Vorratsbehälter 101 des Schleuderdüngerstreuers befestigt.

Die Fig. 8 zeigt den an den Ackerschlepper 112 angebauten Schleuderdüngerstreuer gemäß Fig. 7 in verkleinertem Maßstab und schematischer Darstellung in der Draufsicht. Die den Schleuderscheiben 105 dieses Schleuderdüngerstreuers aus dem Vorratsbehälter 101 über die einstellbaren Auslauföffnungen zugeführten Düngemittelpartikel werden mittels der auf den Schleuderscheiben 105 angeordneten Wurfschaufeln 106 in Breitverteilung über die zu bestreuende Fläche verteilt. Hierbei erzeugen die einzelnen Schleuderscheiben 105 jeweils die Streusektoren 116 und 117, wobei die Düngemittel derart von den Schleuderscheiben 105 abgeschleudert werden, daß sich im Bereich der Mittelachse 118 des Schleuderdüngerstreuers die beiden Streusektoren 116 und 117 geringfügig überlappen. Weiterhin werden die von den Schleuderscheiben 105 abgeschleuderten Düngemittelpartikel bis über den vorderen Begrenzungsbereich 119 des Vorratsbehälters 101 des Schleuderdüngerstreuers nach vorn abgeschleudert. Die Gesamtstreubreite dieses Schleuderdüngerstreuers beträgt 2A und die Streutiefe T kennzeichnet die Ausdehnung der Streusektoren 116 und 117 in Fahrtrichtung 111.

Die Fig. 9 zeigt das von den Schleuderscheiben 105 des Schleuderdüngerstreuers gemäß der Fig. 7 und 8 durch das Abschleudern der Düngemittelpartikel von den Schleuderscheiben 105 erzeugte Streubild 120. Dieses Streubild weist in seinem mittleren Bereich die Streustärke S mit den flach abfallenden Streuflanken 121 auf. Dieses Streubild 120 sagt aus, daß die Streustärke S jeweils in Richtung der größten Arbeitsbreite kontinuierlich abnimmt. Hierdurch wird erreicht, daß bei einem Fahrtrichtungswechsel des Schleppers 112, wobei er dann im Abstand A von seiner in Fig. 8 dargestellten Position wieder zurück, also entgegen seiner jetzigen Fahrtrichtung 111 fährt, kommt es zu einer Überlappung der einzelnen Streubahnen, wobei dann beispielsweise das Streubild 122 entsteht. Durch die Überlappung der einzelnen Streusektoren durch die Hin- und Rückfahrt müssen nun die von den einzelnen Schleuderscheiben während dieser Hin- und Rückfahrt ausgestreuten Düngemittelmengen addiert werden, so daß sich innerhalb der Streubreite A nach zweimaligem Überfahren ein Streubild gleichmäßiger Streustärke S über die gesamte Streubreite ergibt.

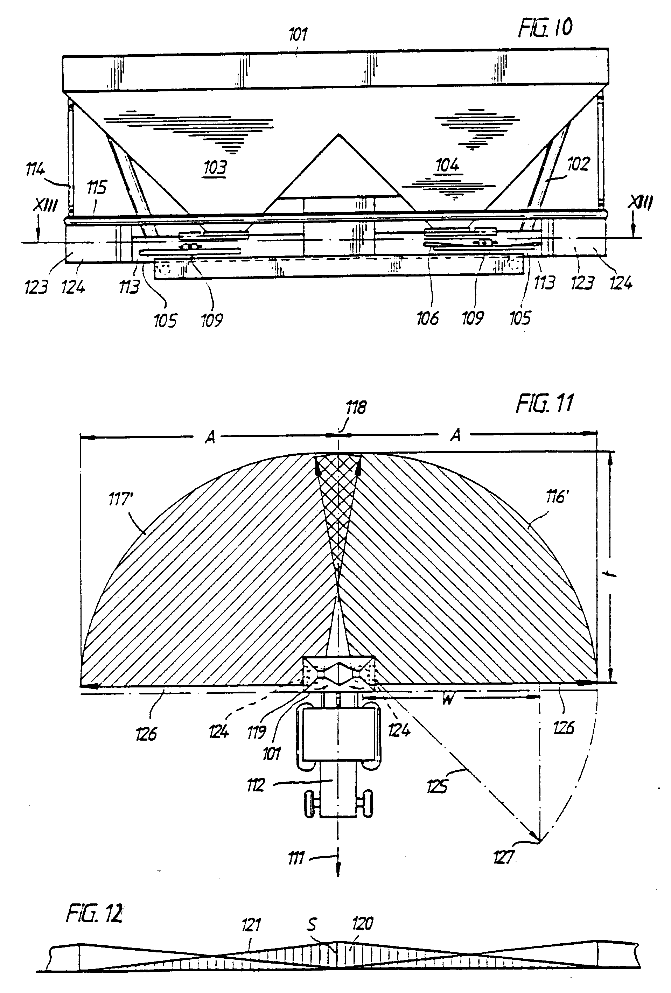

Der Schleuderdüngerstreuer gemäß Fig. 10 unterscheidet sich nur durch die symmetrische Anordnung der zu einem Leitkasten 123 an dem Schutzbügel 115 lösbar befestigten Leitelemente 124. Diese Leitelemente 124 befinden sich auf der jeweiligen äußeren Seite der um die aufrechten Achsen 109 rotierenden Schleuderscheiben 105, in den Bereich der Düngerwurfbahnen, indem die Düngemittel von den Wurfschaufeln 106 der Schleuderscheiben 105 in nach vorn gerichteter Richtung 125 abgeschleudert werden. Die von den Wurfschaufeln 106 in nach vorn gerichteter Richtung 125 abgeschleuderten Düngemittelpartikel, welche ohne den Einsatz der Leitelemente 124 über den vorderen Begrenzungsbereich 119 des Vorratsbehälters 101 des Düngerstreuers abgeschleudert werden durch den Einsatz der spiegelbildlich angeordneten Leitelemente 124 in eine quer oder zumindest annähernd senkrecht zur Fahrtrichtung 111 liegenden Richtung 126 seitlich des Düngerstreuers umgelenkt. Hierbei treffen die abzulenkenden Düngemittelpartikel zunächst an tangential zur Flugbahn der Düngemittelpartikel angestellte Leitelemente 124 und werden dann von diesen Leitelementen 124 in die gewünschte Flugrichtung quer zur Fahrtrichtung 111 umgelenkt. Die senkrecht zur Fahrtrichtung 111 projezierte Wurfweite W der Düngemittelpartikel bleibt hierbei zumindest annähernd erhalten. D.h., daß die Düngemittelpartikel von den Wurfschaufeln 106 der Schleuderscheiben 105 ohne den Einsatz der Leitelemente 124 beispielsweise so abgeschleudert werden, daß sie beispielsweise an der Stelle 127 auf den Boden auftreffen. Werden nun die Düngemittelpartikel mittels der Leitelemente 124 jeweils beidseitig des Schleuderdüngerstreuers symmetrisch umgelenkt, werden die Düngemittelpartikel, die beispielsweise ohne den Einsatz der Leitelemente 124 zur Stelle 127 abgeschleudert werden, derart mittels der Leitelemente 124 umgelenkt und abgebremst, so daß sie im umgelenkten Zustand auch nur die Wurfweite W, die der senkrecht zur Fahrtrichtung 111 projezierten Wurfweite der bis zur Stelle 127 ohne Leitelemente 124 abgeworfenen Düngemittelpartikel entspricht, beträgt. Hierdurch wird erreicht, daß durch den Einsatz der symmetrisch am Schleuderdüngerstreuer angeordneten Leitelemente 124 keine Beeinflussung der Streubildqualität erfolgt und die Streubreite ZA unverändert beibehalten wird. . Die Düngemittelpartikel werden also nur mit einer geringeren Streutiefe t abgeschleudert Durch das "Zusammenschieben" der Streutiefe T auf die Streutiefe t, durch das beidseitige Umlenken der von den Wurfschaufeln 106 der Schleuderscheiben 105 in nach vorn gerichteter Richtung über den vorderen Begrenzungsbereich 119 des Vorratsbehälters 101 des Schleuderdüngerstreuers an sich abgeschleuderten Düngemittelpartikel, bleibt das Streubild 120, welches durch die von den Schleuderscheiben 105 abgeschleuderten Düngemittelpartikel entsteht, unverändert gegenüber dem Streubild des von den Schleuderscheiben 105 des Schleuderdüngerstreuers ohne den Einsatz der Leitelemente 124 erhalten. Es entstehen so die Streusektoren 116' und 117'. Das Umlenken der Düngemittelpartikel mittels der Leitelemente 124 führt also zu einer Verkleinerung der durch die abgeschleuderten Düngemittelpartikel von jeder Schleuderscheibe 105 erzeugten Streusektor. Ohne die Leitelemente 124 werden die Düngemittelpartikel annähernd über einen Bereich von ca. 180° von jeder Schleuderscheibe 105 abgeschleudert und mit Leitelementen 124 wird von jeder Schleuderscheibe 105 nur ein Streusextor 116' und 117' erzeugt, der sich noch annähernd über einen Bereich von ca. 90° erstreckt.

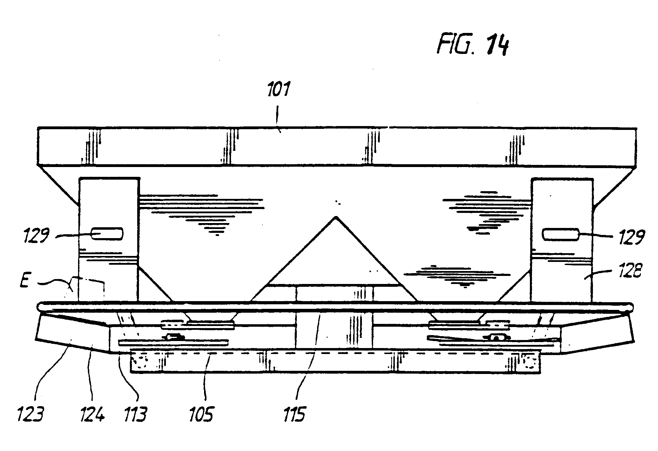

Die Fig. 14 zeigt einen weiteren Schleuderdüngerstreuer, wobei der Schutzbügel 115 mittels der Konsolen 128 an dem Vorratsbehälter 101 befestigt ist. Diese Konsolen 128 dienen gleichzeitig als Halterungen für die Beleuchtungsanlage 129, welche an dem Zentrifugaldüngerstreuer befestigt ist. An dem linken Leitkasten 123 kann der Abdrehbehälter E angebracht werden, welcher mit strichpunktierten Linien eingezeichent ist.

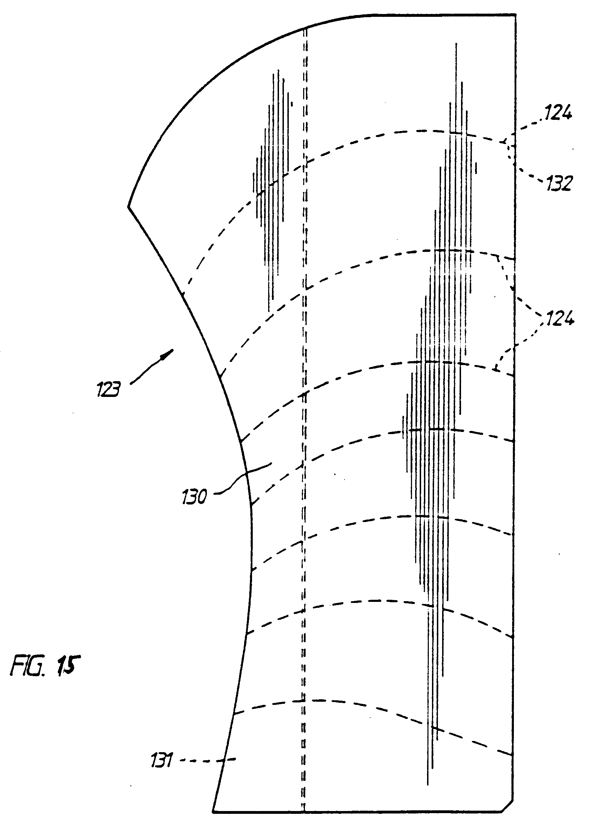

Die Fig. 15 zeigt den Leitkasten 123, der aus der oberen Abdeckplatte 130 und der unteren, abgekanteten Verstärkungsplatte 131 besteht. Zwischen diesen beiden Platten 130 und 131 sind die Leitelemente 124 mit den einzelnen Leitflächen 132 angeordnet. Diese einzelnen Leitflächen 132 sind in Fahrtrichtung gesehen, in einem Abstand zueinander angeordnet. Bei dem hier abgebildeten Leitkasten 123 handelt es sich um den Leitkasten 123 für die in Fahrtrichtung gesehen rechte Schleuderscheibe 105 des Schleuderdüngerstreuers. Für die linke Schleuderscheibe ist der Leitkasten in gleicher Weise, jedoch spiegelbildlich ausgebildet.

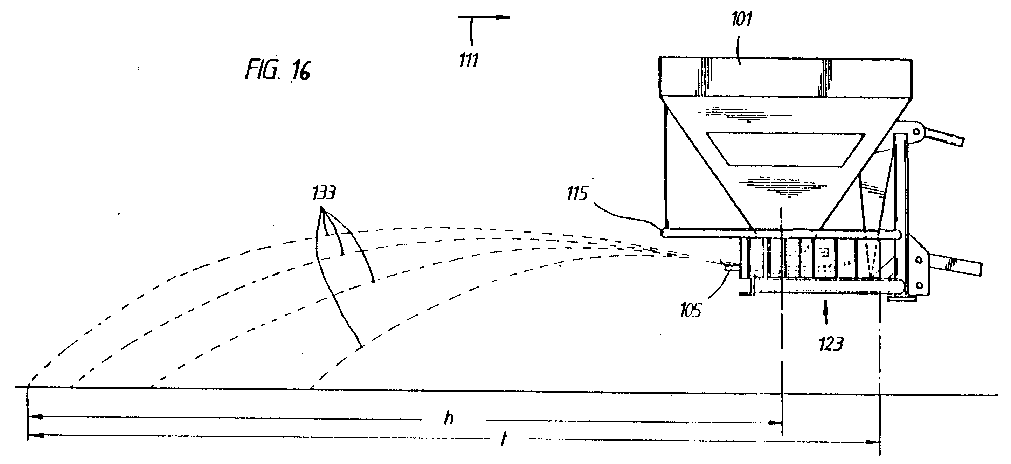

Die Fig. 16 zeigt den Schleuderdüngerstreuer gemäß Fig. 11 in der Seitenansicht, wobei einzelne Wurfbahnen 133 der nach hinten abgeschleuderten Düngemittelpartikel dargestellt sind. Diese nach hinten abgeschleuderten Düngemittelpartikel weisen von der aufrechten Achse 109 der Schleuderscheiben 105 die maximale Weite h auf.

Wird nun die Düngemittelzufuhr zu der rechten Schleuderscheibe 105 des Schleuderdüngerstreuers unterbrochen, werden die Düngemittelpartikel nur über den Streusektor 116' der linken Schleuderscheibe 105 ausgebracht. Das Entstehen der beiden Streusektoren 116' und 117' ist also getrennt steuerbar, wobei bei dem Streuen mit nur einem Streusektor 116' oder 117', die von der Schleuderscheibe 105 nach hinten abgeschleuderten Düngemittelpartikel im wesentlichen nicht über die seitliche Begrenzung 134 des Schleuderdüngerstreuers, die der den Streusektor 116' oder 117'erzeugenden Schleuderscheibe 105 abgewandt ist, hinaus werfen. Hierdurch läßt sich also die Streubreite ZA auf einfachste Weise ohne Beeinflussung der auszustreuenden Menge auf die Breite Ahalbieren. Die über den Streusektor 116' abgeschleuderten Düngemittelpartikel bilden dann das Streubild 135. Dieses Streubild 135 unterscheidet sich nur von dem Streubild 120 dadurch, daß die Streubreite halbiert ist. Die Charakteristik des Streubildes mit flach abfallenden Streuflanken bleibt unverändert beibehalten, wobei auch die Streustärke S bei gleicher Schieberstellung unverändert beibehalten wird.

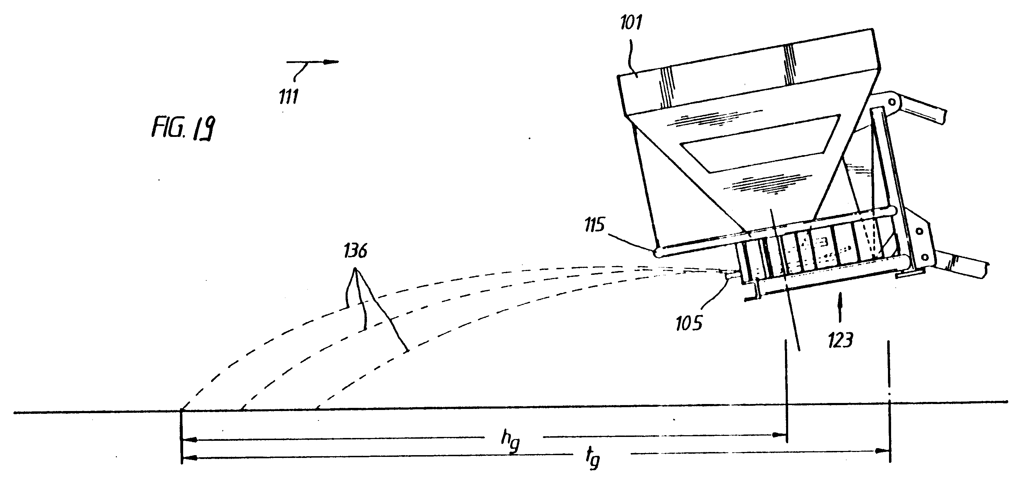

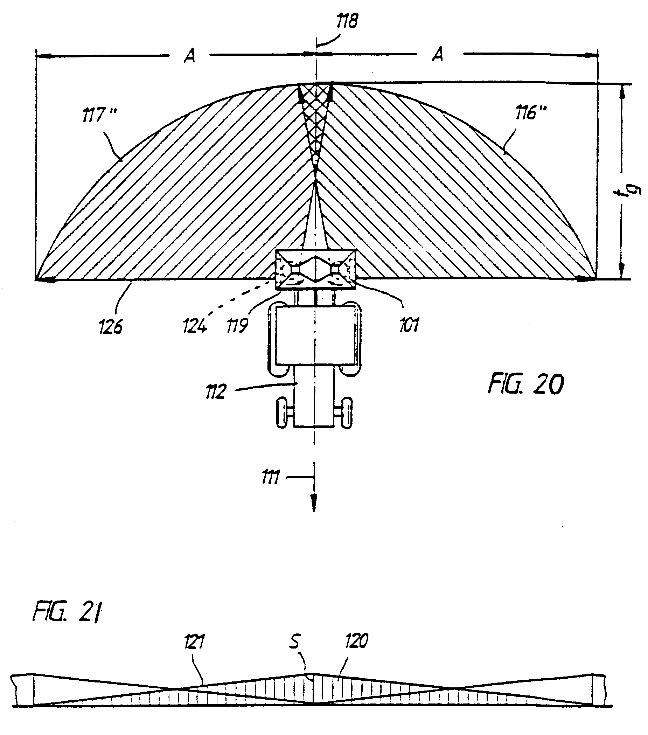

Die Fig. 19 zeigt den Schleuderdüngerstreuer gemäß Fig. 10, der nach hinten-unten geneigt ist. Hierdurch wird erreicht, daß die Wurfweite hg der Wurfbahnen 136 der Düngemittelpartikel, welche von den Schleuderscheiben 105 abgeschleudert werden, nach hinten verkürzt wird. Durch das nach hinten Neigen des Schleuderdüngerstreuers verringert sich die Streutiefe t noch einmal um einige Meter auf den Betrag tg und es entstehen die Streusektoren 116'' und 117'' gemäß Fig. 20. Auch dieses nach hinten Neigen des Schleuderdüngerstreuers wirkt sich nicht auf das Streubild 110 aus, welches von den von den Schleuderscheiben 105 abgeschleuderten Düngemittelpartikeln gebildet wird. Es bleibt in identischer Weise die Streubildcharakteristik gemäß Fig. 9 erhalten.

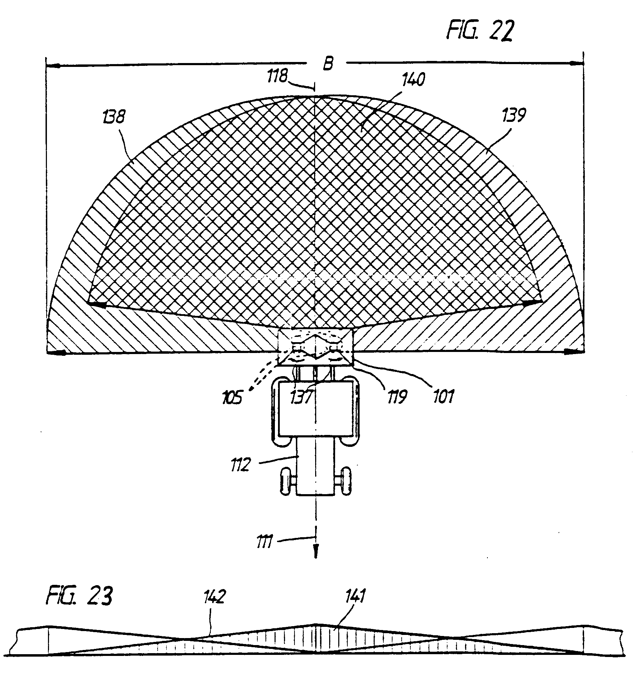

Die Fig. 22 zeigt in schematischer Darstellung den Ackerschlepper 112 und den an den Ackerschlepper an gebauten Schleuderdüngerstreuer mit den in Pfeilrichtung 137 angetriebenen Schleuderscheiben 105. Diese Schleuderscheiben 105 werden derart angetrieben, daß sie in Fahrtrichtung 111 auf der Vorderseite des Schleuderdüngerstreuers auseinanderdrehen. Die den beiden Schleuderscheiben 105 aus dem Vorratsbehälter zugeführten Düngemittelpartikel werden über die Streusektoren 138 und 139 abgeschleudert. Durch die Antriebsrichtung der Schleuderscheiben 105, jeweils in Pfeilrichtung 137 wird erreicht, daß die von den einzelnen Schleuderscheiben 105 erzeugten Streusektoren 138 und 139 sich an sich annähernd vollständig überlappen, so daß der große Überlappungsbereich 140 entsteht. Die einzelnen Düngemittelpartikel werden innerhalb dieser Streusektoren 138 und 139 jeweils seitlich und nach hinten, in bezug auf den Schleuderdüngerstreuer abgeschleudert. Infolge der gewählten Antriebsrichtung der Schleuderscheiben 105 wird sichergestellt, daß keine Düngemittelpartikel in nach vorn gerichteter Richtung über den vorderen Begrenzungsbereich 119 des Vorratsbehälters 101 des Schleuderdüngerstreuers abgeschleudert werden. Die von den Schleuderscheiben 105 gleichmäßig über die Streubreite B abgeschleuderten Düngemittelpartikel lassen das Streubild 141 gemaß Fig. 23 entstehen. Dieses Streubild 141 weist ebenfalls flach abfallende Streuflanken 142 auf.

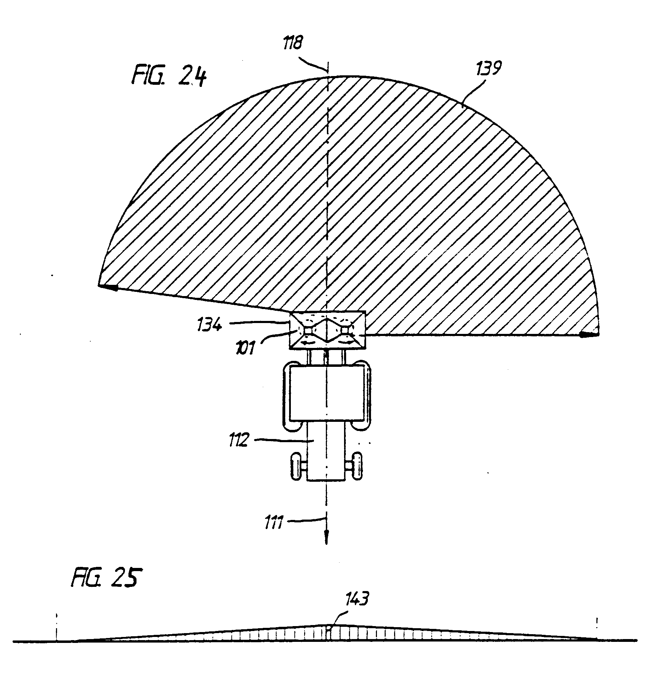

Wird nun die Düngemittelzufuhr der rechten Schleuderscheiben 105 unterbrochen, schleudert die linke Schleuderscheibe 105 die ihr zugeführten Düngemittelpartikel innerhalb des Streusektors 139 gemäß Fig. 24 ab. Hierbei werden die von dieser Schleuderscheibe 105 sehr weit über die seitliche Begrenzung 134 des Streuers, die der den Streusektor 139 erzeugenden Schleuderscheibe 105, also der linken Schleuderscheibe, abgewandt ist, hinausgeworfen. Es steht das Streubild 143 gemäß Fig. 25.

## Patentansprüche

1. Verfahren zum Ausbringen von Düngemittel mittels eines Zentrifugaldüngerstreuers, der die Düngemittel mittels Schleuderscheiben (5) fächerartig über die zu bestreuende Fläche verteilt, wobei man die Schleuderscheiben in entgegengesetzem Drehsinn zueinander antreibt und wobei man einen Teil der von den Schleuderscheiben wegfliegenden Partikel mittels von den Schleuderscheiben weggerichteten Leitelementen (14, 124) in bestimmte Richtungen umlenkt,
dadurch **gekennzeichnet,**
daß man die Umlenkung durch Anordnung der Leitelemente (14, 124) so vornimmt, daß die quer zur Fahrtrichtung zwischen einer Schleuderscheibenachse und dem Streufächerrand gemessene Streubreite des Streufächers zumindest annähernd unverändert bleibt, der von dem Streufächer aufgespannte Streuwinkelbereich (α') aber verringert wird, wobei der verringerte Fächer (α') mit einer Begrenzungslinie etwa quer zur Fahrtrichtung des Streuers liegt.

2. Verfahren nach Anspruch 1,
dadurch **gekennzeichnet,**
daß die abzulenkenden Düngerpartikel beidseitig des Streuers entsprechend umgelenkt werden.

3. Verfahren nach Anspruch 1 und/oder 2,
dadurch **gekennzeichnet,**
daß die Düngerpartikel beidseitig in gleicher Weise - jedoch spiegelsymmetrisch - umgelenkt werden.

4. Verfahren nach Anspruch 1,
dadurch **gekennzeichnet,**
daß die abzulenkenden Düngerpartikel zunächst sich an tangential zur Flugbahn angestellte Leitelemente (14, 124) anlegen und dann von diesen Leitelementen (14, 124) in die gewünschte Flugrichtung quer zur Fahrtrichtung (11, 111) umgelenkt werden.

5. Zentrifugaldüngerstreuer zur Durchführung des Verfahrens nach einem oder mehreren der Ansprüche 1 bis 4, mit einem Rahmen (2), mit einem Vorratsbehälter (1) sowie mit zumindest zwei um aufrechte Achsen rotierend angetriebenen Schleuderscheiben (5) mit Wurfschaufeln (6), mit denen der sich im Vorratsbehälter befindliche Dünger über eine Dosiereinrichtung (8) in einstellbaren Mengen zugeführt wird und die aufgrund der durch die Roation der Scheiben erzeugte Zentrifugalkraft den Dünger fächerförmig über Arbeitsbreiten abschleudern, die ein Mehrfaches der Breite des Düngers betragen, wobei am Umfang der Schleuderscheiben von den Schleuderscheiben weggerichtete, in einem Seitenbereich einer Schleuderscheibe auf einer Seite des Streuers angeordnete Leitelemente (14, 124) mit Leitflächen angeordnet sind, die die abgeschleuderten Partikel umlenken,
dadurch **gekennzeichnet,**
daß die jeweils auf beiden Seiten des Streuers angeordneten Leitelemente (14, 124) derart angeordnet und ausgebildet sind, daß sich ein Streufächerbild ergibt, bei dem die quer zur Fahrtrichtung zwischen Schleuderscheibenachse (9) und der Streufächerrand gemessene Streubreite der Streuchfächer gegenüber dem Abstreuen ohne Leitelemente zumindest annähernd unverändert bleibt, der von dem Streufächer aufgespannte Streuwinkelbereich (α') aber verringert wird und daß eine Begrenzungslinie des verringerten Fächers etwa quer zur Fahrrichtung des Streuers liegt.

6. Zentrifugaldüngerstreuer nach Anspruch 5,
dadurch **gekennzeichnet,**
daß die auf beiden Seiten angeordneten Leitflächen (13, 14, 124) zueinander spiegelbildlich ausgebildet sind.

7. Zentrifugaldüngerstreuer nach Anspruch 5,
dadurch **gekennzeichnet,**
daß die Leitflächen (13, 14, 124) in ihrem vorderren, den Schleuderscheiben (5, 105) zugewandten Bereich zumindest etwa tangential zur Abwurfrichtung der Düngerpartikel verlaufen und über die sich anschließende Krümmung etwa in sehkrechter Richtung (15, 126) zur Fahrtrichtung (11, 111) übergehen.

8. Zentrifugaldüngerstreuer nach Anspruch 5,
dadurch **gekennzeichnet,**
daß mehrere Leitflächen (13, 14, 124) in Fahrtrichtung (11, 111) gesehen, in einem Abstand zueinander angeordnet sind.

9. Zentrifugaldüngerstreuer nach einem oder mehreren der vorstehenden Ansprüche 4 bis 8,
dadurch **gekennzeichnet,**
daß die hinteren Leitflächen in ihrem äußeren Bereich entgegen der Fahrtrichtung (11, 111) gekrümmt sind, so daß ihre Enden seitlich nach außen und hinten weisen.

10. Zentrifugaldüngerstreuer nach Anspruch 8,
dadurch **gekennzeichnet,**
daß die Leitflächen (13, 14, 124) durch einen Rahmen (16) zu einem Leitkasten (18, 123) zusammengefaßt sind.

11. Zentrifugaldüngerstreuer nach Anspruch 5,
dadurch **gekennzeichnet,**
daß im hinteren sowie seitlichen hinteren Bereich der Schleuderscheiben (5, 105) jeweils aufrechte Leitflächen (13, 27) derart angeordnet sind, daß sie den seitlich schräg nach hinten, in Fahrtrichtung (11, 111) gesehen, abgeschleuderten Dünger in eine quer oder zumindest annähernd quer zur Fahrtrichtung (11, 111) liegende Richtung (15, 28) seitlich des Streuers umlenken.

12. Zentrifugaldüngerstreuer nach Anspruch 5,
dadurch **gekennzeichnet,**
daß sich hinter den Schleuderscheiben (5, 105) zusätzlich ein liegend angeordnetes Leitblech (25) befindet, welches sich auf der den Schleuderscheiben (5) zugewandten Seite zunächst etwa tangential an die Wurfbahnen der Düngepartikel anlegt und dann nach unten gekrümmt ist und die Düngepartikel seitlich nach unten ablenkt.

13. Zentrifugaldüngerstreuer nach Anspruch 12,
dadurch **gekennzeichnet,**
daß auf der Unterseite des Leitbleches (25) aufrecht stehende Leitflächen (27) angeordnet sind, daß diese Leitflächen (27) sich zunächst auf ihren, den Schleuderscheiben (5) zugewandten Seiten tangential an die Wurfbahn der Düngerpartikel anlegen und anschließend in seitlicher Richtung gekrümmt sind.

14. Zentrifugaldüngerstreuer nach Anspruch 5, 11, 12 und/oder 13,
dadurch **gekennzeichnet,**
daß die aufrechten Leitelemente (14, 27, 25, 124, 132) um eine Gelenkachse höhenverschwenkbar sind.

15. Zentrifugaldüngerstreuer nach Anspruch 5,
dadurch **gekennzeichnet,**
daß die aufrechten Leitelemente (14, 27, 25, 124, 132), von den Schleuderscheiben (5, 105) aus gesehen, eine zunehmende Höhe aufweisen.

16. Zentrifugaldüngerstreuer nach Anspruch 12,
dadurch **gekennzeichnet,**
daß die Leitflächen (13, 27, 25, 124, 132) in eine Transportstellung bringbar sind.

17. Zentrifugaldüngerstreuer nach Anspruch 12,
dadurch **gekennzeichnet,**
daß die vorderste Leitfläche (19) sich unmittelbar an den vorderen, die Schleuderscheiben (5, 105) nach vorne abschirmenden Leitschirm (20, 113) anschließt.

18. Zentrifugaldüngerstreuer nach einem oder mehreren der Ansprüche,
daß der Schleuderstreuer bzw. die Scheiben (5, 105) und/oder deren Drehachse (9, 109) oder Wurfschaufeln (6, 106) derart einstellbar oder eingestellt sind, daß die Düngerpartikel zunächst etwa horizontal abgeworfen werden.

19. Zentrifugaldüngerstreuer nach Anspruch 5 und/oder 16,
dadurch **gekennzeichnet,**
daß die Schleuderscheibenachsen (9, 109) oben nach hinten-unten geneigt sind.

20. Zentrifugaldüngerstreuer nach Anspruch 19,
dadurch **gekennzeichnet,**
daß der gesamte Streuer nach hinten-unten geneigt ist.

21. Zentrifugaldüngerstreuer nach Anspruch 5,
dadurch **gekennzeichnet,**
daß die Leitelemente (13, 27, 124) verschwenkbare Flügelteile (13') besitzen.

22. Zentrifugaldüngerstreuer nach Anspruch 5,
dadurch **gekennzeichnet,**
daß die Leitelemente an einem Streuer angeordnet sind, dessen Schleuderscheiben sich annähernd überlappende Streusektoren erzeugen.

23. Zentrifugaldüngerstreuer nach einem oder mehreren der Ansprüche 5 bis 21,
dadurch **gekennzeichnet,**
daß die Leitelemente an einem Streuer angeordnet sind, dessen Schleuderscheiben sich annähernd überlappende Streusektoren erzeugen.

24. Zentrifugaldüngerstreuer nach Anspruch 10,
dadurch **gekennzeichnet,**
daß der leitkasten (18, 123) nach unten offen ist, wobei auf der Unterseite des Leitkastens (18, 123) dünnen Streben zur Fixierung der Leitflächen (13, 14, 124) angeordnet sind.

25. Zentrifugaldüngerstreuer nach einem oder mehreren der Ansprüche 5 bis 24,
dadurch **gekennzeichnet,**
daß auf der Oberseite der Leitflächen (13, 14, 124) eine geschlossene Platte (130) angeordnet ist.

26. Zentrifugaldüngerstreuer nach wenigstens einem der Ansprüche 5 bis 25,
dadurch **gekennzeichnet,**
daß am Rahmen des Streuers ein zumindest seitlich und nach hinten umlaufendes Unfallschutzelement, beispielsweise ein Schutzbügel (115) angeordnet ist, welches einen größeren Umfang als der Rotationsdurchmesser der Schleuderscheiben 105 aufweist.

27. Zentrifugaldüngerstreuer nach Anspruch 26,
dadurch **gekennzeichnet,**
daß an dem Unfallschutzelement die Leitflächen und/oder der Leitkasten (18, 123, 145) befestigt ist.

28. Zentrifugaldüanger nach Anspruch 26,
dadurch **gekennzeichnet,**
daß das Unfallschutzelement (115) in den Leitkasten (18, 123) integriert ist.

29. Zentrifugaldüangerstreuer nach Anspruch 26,
dadurch **gekennzeichnet,**
daß der Leitkasten (18, 123) leicht lösbar am Schutzbügel (115) befestigt ist.

30. Zentrifugaldüangerstreuer nach Anspruch 26 und/oder 10,
dadurch **gekennzeichnet,**
daß an dem Unfallschutzelement (115) und/oder einem der Leitkästen (18, 123) ein Behälter (E) zum Auffangen der "abgedrehten" Düngermenge angeordnet ist.

31. Zentrifugaldüngerstreuer nach Anspruch 26,
dadurch **gekennzeichnet,**
daß auf der Rückseite des Streuers zwischen dem Rahmen oder Vorratsbehälter (101) und dem Schutzbügel (115) Halterungen (128) angeordnet sind, und daß an diesen Halterungen (128) die Rückleuchten (129) angeordnet sind.

32. Zentrifugaldüngerstreuer nach Anspruch 26,
dadurch **gekennzeichnet,**
daß die Rückleuchten (129) an dem Unfallschutzelement (115) angeordnet sind.

33. Zentrifugaldüngerstreuer nach Anspruch 10,
dadurch **gekennzeichnet,**
daß die Rückleuchten (129) an dem Leitkasten (18, 123, 145) angeordnet sind.

34. Zentrifugaldüngerstreuer nach Anspruch 10,
dadurch **gekennzeichnet,**
daß in Fahrtrichtung (111) gesehen vor dem leitkasten (18, 123) ein Rammschutz angeordnet ist.

35. Zentrifugaldüngerstreuer nach Anspruch 26,
dadurch **gekennzeichnet,**
daß der Schutzbügel (125) als Rammschutz für den Leitkasten (18, 123) ausgebildet ist.

## Claims

1. Method of distributing fertilizer by means of a centrifugal fertilizer spreader, which distributes the fertilizers by means of centrifugal discs (5) in a fan-like manner over the area to be covered, the centrifugal discs being driven in opposite directions of rotation relative to one another and a portion of the particles flying away from the centrifugal discs being guided into predetermined directions by means of guide members (14, 124), which are orientated away from the centrifugal discs, characterised in that the guidance is effected by the provision of the guide members (14, 124), so that the width of dispersion of the dispersing fan, measured transversely relative to the direction of travel between one centrifugal disc axis and the edge of the dispersing fan, remains at least approximately unchanged, but the angular range of dispersion (α'), formed by the dispersing fan, is reduced, the reduced fan (α') having a boundary line substantially transversely relative to the direction of travel of the spreader.

2. Method according to claim 1, characterised in that the fertilizer particles to be deflected are accordingly guided on both sides of the spreader.

3. Method according to claim 1 and/or 2, characterised in that the fertilizer particles are guided on both sides in an identical manner - but in a mirror-symmetrical manner.

4. Method according to claim 1, characterised in that the fertilizer particles to be deflected initially lie adjacent to guide members (14, 124), which are orientated tangentially relative to the path of dispersion, and said particles are then guided by said guide members (14, 124) into the desired direction of dispersion transversely relative to the direction of travel (11, 111).

5. Centrifugal fertilizer spreader for accomplishing the method according to one or more of claims 1 to 4, having a frame (2), a hopper (1) and at least two centrifugal discs (5), which are driven so as to be rotatable about upwardly extending axes and are provided with throwing vanes (6), by means of which discs the fertilizer situated in the hopper is delivered in adjustable quantities via the intermediary of a metering device (8), said discs centrifuging the fertilizer in a fan-like manner, due to the centrifugal force produced by the rotation of the discs, over working widths which are a multiple of the width of the fertilizer spreader, guide members (14, 124) being disposed on the periphery of the centrifugal discs and having guide faces which guide the centrifuged particles, said guide members being disposed in a lateral region of a centrifugal disc on one side of the spreader and being orientated away from the centrifugal discs, characterised in that the guide members (14, 124), disposed on both sides of the spreader, are disposed and configured such that a dispersing fan pattern is produced, wherein the width of dispersion of the dispersing fans, measured transversely relative to the direction of travel between the centrifugal disc axis (9) and the dispersing fan edge, remains at least approximately unchanged as compared with the scattering without guide members, but the angular range of dispersion (∝'), formed by the dispersing fan, is reduced, and a boundary line of the reduced fan lies substantially transversely relative to the direction of travel of the spreader.

6. Centrifugal fertilizer spreader according to claim 5, characterised in that the guide faces (13, 14, 124), disposed on both sides, are mirror images of one another.

7. Centrifugal fertilizer spreader according to claim 5, characterised in that the guide faces (13, 14, 124), in their front region facing the centrifugal discs (5, 105), extend at least substantially tangentially relative to the discharge direction of the fertilizer particles and pass over the subsequent curvature in a substantially vertical direction (15, 126) relative to the direction of travel (11, 111).

8. Centrifugal fertilizer spreader according to claim 5, characterised in that, when viewed with respect to the direction of travel (11, 111), a plurality of guide faces (13, 14, 124) are disposed with a spacing therebetween.

9. Centrifugal fertilizer spreader according to one or more of the preceding claims 4 to 8, characterised in that the rear guide faces, in their outer region, are curved in a direction in opposition to the direction of travel (11, 111), so that their ends point laterally outwardly and rearwardly.

10. Centrifugal fertilizer spreader according to claim 8, characterised in that the guide faces (13, 14, 124) are combined, by means of a frame (16), to form a guide box (18, 123).

11. Centrifugal fertilizer spreader according to claim 5, characterised in that upwardly extending guide faces (13, 27) are disposed both in the rear region and in the lateral rear region of the centrifugal discs (5, 105) in such a manner that they guide the fertilizer, which is centrifuged laterally and inclinedly rearwardly, when viewed with respect to the direction of travel (11, 111), into a direction (15, 28) laterally of the spreader lying transversely, or at least approximately transversely, relative to the direction of travel (11, 111).

12. Centrifugal fertilizer spreader according to claim 5, characterised in that a horizontally disposed baffle plate (25) is additionally situated behind the centrifugal discs (5, 105), which baffle plate initially lies at least substantially tangentially adjacent to the trajectories of the fertilizer particles on the side facing the centrifugal discs (5) and is then curved downwardly and deflects the fertilizer particles laterally and downwardly.

13. Centrifugal fertilizer spreader according to claim 12, characterised in that upwardly extending guide faces (27) are disposed on the underside of the baffle plate (25), and in that said guide faces (27) initially lie tangentially adjacent to the trajectory of the fertilizer particles on their sides facing the centrifugal discs (5) and are subsequently curved in a lateral direction.

14. Centrifugal fertilizer spreader according to claims 5, 11, 12 and/or 13, characterised in that the upwardly extending guide members (14, 27, 25, 124, 132) are vertically pivotable about a pivot axis.

15. Centrifugal fertilizer spreader according to claim 5, characterised in that the upwardly extending guide members (14, 27, 25, 124, 132) have an increasing height, when viewed from the centrifugal discs (5, 105).

16. Centrifugal fertilizer spreader according to claim 12, characterised in that the guide faces (13, 27, 25, 124, 132) can be brought into a transportation position.

17. Centrifugal fertilizer spreader according to claim 12, characterised in that the foremost guide face (19) communicates directly with the front baffle screen (20, 113), which shields the centrifugal discs (5, 105) forwardly.

18. Centrifugal fertilizer spreader according to one or more of the claims, characterised in that the centrifugal spreader, or respectively the discs (5, 105) and/or their rotary axle (9, 109) or throwing vanes (6, 106) is or are adjustable or adjusted in such a manner that the fertilizer particles are initially discharged substantially horizontally.

19. Centrifugal fertilizer spreader according to claim 5 and/or 16, characterised in that the centrifugal disc axles (9, 109) are inclined rearwardly from top to bottom.

20. Centrifugal fertilizer spreader according to claim 19, characterised in that the entire spreader is inclined rearwardly downwardly.

21. Centrifugal fertilizer spreader according to claim 5, characterised in that the guide members (13, 27, 124) have pivotable vane portions (13').

22. Centrifugal fertilizer spreader according to claim 5, characterised in that the guide members are disposed on a spreader, the centrifugal discs of which produce dispersing sectors which generally overlap.

23. Centrifugal fertilizer spreader according to one or more of claims 5 to 21, characterised in that the guide members are disposed on a spreader, the centrifugal discs of which produce dispersing sectors which generally overlap.

24. Centrifugal fertilizer spreader according to claim 10, characterised in that the guide box (18, 123) is open downwardly, thin bars being disposed on the underside of the guide box (18, 123) for the securement of the guide faces (13, 14, 124).

25. Centrifugal fertilizer spreader according to one or more of claims 5 to 24, characterised in that a closed plate (130) is disposed on the upper surface of the guide faces (13, 14, 124).

26. Centrifugal fertilizer spreader according to at least one of claims 5 to 25, characterised in that a safety device, for example a guard rail (115), is disposed on the frame of the spreader, said device extending at least laterally and rearwardly and having a greater periphery than the rotational diameter of the centrifugal discs (105).

27. Centrifugal fertilizer spreader according to claim 26, characterised in that the guide faces and/or the guide box (18, 123, 145) are or is mounted on the safety device.

28. Centrifugal fertilizer spreader according to claim 26, characterised in that the safety device (115) is incorporated in the guide box (18, 123).

29. Centrifugal fertilizer spreader according to claim 26, characterised in that the guide box (18, 123) is easily detachably mounted on the guard rail (115).

30. Centrifugal fertilizer spreader according to claim 26 and/or 10, characterised in that a container (E) for collecting the "deflected" quantity of fertilizer is disposed on the safety device (115) and/or on one of the guide boxes (18, 123).

31. Centrifugal fertilizer spreader according to claim 26, characterised in that mounting supports (128) are disposed on the rear end of the spreader between the frame or hopper (101) and the guard rail (115), and in that the rear lights (129) are disposed on said mounting supports (128).

32. Centrifugal fertilizer spreader according to claim 26, characterised in that the rear lights (129) are disposed on the safety device (115).

33. Centrifugal fertilizer spreader according to claim 10, characterised in that the rear lights (129) are disposed on the guide box (18, 123, 145).

34. Centrifugal fertilizer spreader according to claim 10, characterised in that a protective device is disposed in front of the guide box (18, 123), when viewed with respect to the direction of travel (111).

35. Centrifugal fertilizer spreader according to claim 26, characterised in that the guard rail (115) is a protective device for the guide box (18, 123).

## Revendications

1. Procédé de distribution d'engrais à l'aide d'un épandeur d'engrais, centrifuge, qui distribue l'engrais à l'aide de disques d'épandage (105), suivant une distribution en éventail sur la surface d'épandage, les disques d'épandage étant entraînés en rotation en sens opposé et une partie des granulés projetés par les disques d'épandage sont déviés, dans des directions déterminées, par des éléments de guidage (114, 124) s'écartant des disques d'épandage,
procédé caractérisé en ce que
on assure la déviation par la mise en place d'éléments de guidage (14, 124) pour que la largeur d'épandage de l'éventail d'épandage, mesurée transversalement à la direction de déplacement entre un axe de disque d'épandage et le bord de l'éventail d'épandage, reste au moins approximativement constante, mais pour que la plage angulaire d'épandage (α') correspondant à l'éventail d'épandage soit réduite, cet éventail d'angle réduit (a') ayant l'une de ses lignes limites située sensiblement transversalement à la direction de déplacement de l'épandeur.

2. Procédé selon la revendication 1, caractérisé en ce que les granulés d'engrais à dévier sont déviés de part et d'autre de l'épandeur.

3. Procédé selon la revendication 1 et/ou 2, caractérisé en ce que les particules d'engrais sont déviées de la même manière des deux côtés, c'est-à-dire d'une manière symétrique.

4. Procédé selon la revendication 1, caractérisé en ce que les granulés d'engrais à dévier arrivent tout d'abord sur des éléments de guidage (14, 124) disposés tangentiellement à leur trajectoire pour être déviés par ces éléments de guidage (14, 124) dans la direction de trajectoire souhaitée, transversalement à la direction de déplacement (11, 111).

5. Epandeur centrifuge d'engrais pour la mise en oeuvre du procédé selon l'une ou plusieurs des revendications 1 à 4, comportant un châssis (2) équipé d'un réservoir d'alimentation (1) ainsi que d'au moins deux disques d'épandage (5) avec des palettes d'éjection (6), ces disques tournant autour d'axes verticaux, et recevant, en quantité réglable, par une installation de dosage (8), l'engrais du réservoir, pour expulser l'engrais en éventail sur la largeur de travail, grâce à la force centrifuge engendrée par la rotation des disques, cette largeur représentant un multiple de la largeur de l'épandeur, et à la périphérie des disques d'épandage, il y a des éléments de guidage (14, 124) avec des surfaces de guidage, qui s'écartent des disques d'épandage et se situent dans une zone latérale d'un disque d'épandage, d'un côté de l'épandeur, épandeur caractérisé en ce que
les éléments de guidage (14, 124) prévus de chaque côté de l'épandeur sont disposés et conçus pour donner une image d'épandage en forme d'éventail dont la largeur d'épandage mesurée transversalement à la direction de déplacement, entre un axe de disque d'épandage (9) et le bord de l'éventail d'épandage, reste pratiquement inchangée par rapport à la largeur d'épandage pour l'épandage sans élément de guidage, et que la plage de l'angle d'épandage (α') sous-tendu par l'éventail d'épandage soit néanmoins réduite et qu'une des lignes limites de l'éventail réduit se situe sensiblement transversalement à la direction de déplacement de l'épandeur.

6. Epandeur centrifuge d'engrais selon la revendication 5, caractérisé en ce que les surfaces de guidage (13, 14, 124) prévues des deux côtés, sont symétriques.

7. Epandeur centrifuge d'engrais selon la revendication 5, caractérisé en ce que les surfaces de guidage (13, 14, 124) sont dirigées au moins sensiblement tangentiellement à la direction d'éjection des granulés d'engrais dans leur partie avant située du côté des disques d'épandage (5, 105), et rejoignent, par une courbure consécutive, sensiblement la direction perpendiculaire (15, 126) à la direction de déplacement (11, 111).

8. Epandeur centrifuge d'engrais selon la revendication 5, caractérisé par plusieurs surfaces de guidage (13, 14, 124) disposées de manière écartée les unes par rapport aux autres dans la direction de déplacement (11, 111).

9. Epandeur centrifuge d'engrais selon l'une ou plusieurs des revendications précédentes 4 à 8, caractérisé en ce que les surfaces de guidage arrière sont recourbées dans leur zone extérieure, dans la direction opposée à la direction de déplacement (11, 111) pour que leurs extrémités soient tournées latéralement vers l'extérieur et vers l'arrière.

10. Epandeur centrifuge d'engrais selon la revendication 8, caractérisé en ce que les surfaces de guidage (13, 14, 124) sont réunies par un châssis (16) pour former un caisson de guidage (18, 123).

11. Epandeur centrifuge d'engrais selon la revendication 5, caractérisé en ce que des surfaces de guidage (13, 27), respectives, relevées, sont prévues dans la zone arrière et latérale-arrière des disques d'épandage (5, 105) de façon à dévier l'engrais projeté latéralement, en biais vers l'arrière, par rapport à la direction de déplacement (11, 111), dans une direction transversale ou pratiquement transversale (15, 28) par rapport à la direction de déplacement (11, 111), latéralement par rapport à l'épandeur.

12. Epandeur centrifuge d'engrais selon la revendication 5, caractérisé en ce que derrière les disques d'épandage (5, 105) il est en outre prévu une tôle de guidage (25), couchée, qui rejoint de manière sensiblement tangentielle la trajectoire des granulés d'engrais du côté tourné vers les disques d'épandage (5) puis cette tôle se courbe vers le bas et dévie latéralement vers le bas les granulés d'engrais.

13. Epandeur centrifuge d'engrais selon la revendication 12, caractérisé par des surfaces de guidage (27) disposées debout sur la face inférieure de la tôle de guidage (25), ces surfaces de guidage (27) rejoignant tout d'abord tangentiellement la trajectoire des granulés d'engrais du côté tourné vers les disques d'épandage (5) puis ces surfaces sont courbées dans la direction latérale.

14. Epandeur centrifuge d'engrais selon les revendications 5, 11, 12 et/ou 13, caractérisé en ce que les éléments de guidage debout (14, 27, 25, 124, 132) peuvent pivoter de manière relevable autour d'un axe d'articulation.

15. Epandeur centrifuge d'engrais selon la revendication 5, caractérisé en ce que les éléments de guidage relevés (14, 27, 25, 124, 132) ont une hauteur croissante lorsqu'ils sont vus des disques d'épandage (5, 105).

16. Epandeur centrifuge d'engrais selon la revendication 12, caractérisé en ce que les surfaces de guidage (13, 27, 25, 124, 132) peuvent être mises en position de transport.

17. Epandeur centrifuge d'engrais selon la revendication 12, caractérisé en ce que la surface de guidage (19) la plus à l'avant le relie directement à l'écran de guidage (20, 113), avant, protégeant vers l'avant des disques d'épandage (5, 105).

18. Epandeur centrifuge d'engrais selon une ou plusieurs des revendications, caractérisé en ce que l'épandeur centrifuge ou les disques (5, 105) et/ou leur axe de rotation (9, 109) ou les palettes d'éjection (6, 106) sont réglés ou peuvent être réglés pour éjecter tout d'abord sensiblement horizontalement les granulés d'engrais.

19. Epandeur centrifuge d'engrais selon la revendication 5 et/ou 16, caractérisé en ce que les axes (9, 109) des disques d'épandage sont inclinés vers l'arrière et le bas.

20. Epandeur centrifuge d'engrais selon la revendication 19, caractérisé en ce que l'ensemble de l'épandeur est incliné vers l'arrière et le bas.

21. Epandeur centrifuge d'engrais selon la revendication 5, caractérisé en ce que les éléments de guidage (13, 27, 124) comportent des volets (13') pivotants.

22. Epandeur centrifuge d'engrais selon la revendication 5, caractérisé en ce que les éléments de guidage sont montés sur un épandeur dont les disques d'épandage génèrent des secteurs d'épandage qui se chevauchent sensiblement.

23. Epandeur centrifuge d'engrais selon une ou plusieurs des revendications 5 à 21, caractérisé en ce que les éléments de guidage sont prévus sur un épandeur dont les disques d'épandage génèrent des secteurs d'épandage qui se chevauchent pratiquement.

24. Epandeur centrifuge d'engrais selon la revendication 10, caractérisé en ce que le caisson de guidage (18, 123) est ouvert vers le bas et le côté inférieur du caisson de guidage (18, 123) comporte de minces entretoises pour fixer les surfaces de guidage (13, 14, 124).

25. Epandeur centrifuge d'engrais selon une ou plusieurs des revendications 5-24, caractérisé par une plaque fermée (130) prévue sur la face supérieure des surfaces de guidage (13, 14, 124).

26. Epandeur centrifuge d'engrais selon au moins l'une des revendications 5-25, caractérisé en ce que sur le châssis de l'épandeur il est prévu au moins un élément de protection périphérique contre les accidents, latéralement et vers l'arrière, par exemple un arceau de protection (115) qui présente une partie plus grande que le diamètre des disques d'épandage (105).

27. Epandeur centrifuge d'engrais selon la revendication 26, caractérisé en ce que les surfaces de guidage et/ou les caissons de guidage (18, 123, 145) sont fixés sur l'élément de protection.

28. Epandeur centrifuge d'engrais selon la revendication 26, caractérisé en ce que l'élément de protection (115) est intégré aux caissons de guidage (18, 123).

29. Epandeur centrifuge d'engrais selon la revendication 26, caractérisé en ce que le caisson de guidage (18, 123) est fixé de manière facilement amovible à l'arceau de protection (115).

30. Epandeur centrifuge d'engrais selon la revendication 26 et/ou 10, caractérisé en ce que sur l'élément de protection (115) et/ou l'un des caissons de guidage (18, 123) il est prévu un réceptacle (E) pour recueillir la quantité d'engrais servant aux essais.

31. Epandeur centrifuge d'engrais selon la revendication 26, caractérisé en ce que sur le côté arrière de l'épandeur, entre le châssis ou le réservoir (101) et l'arceau de protection (115), il y a des moyens de fixation (128) sur lesquels sont montés les feux arrière (129).

32. Epandeur centrifuge d'engrais selon la revendication 26, caractérisé en ce que les feux arrières (129) sont prévus sur l'élément de protection (115).

33. Epandeur centrifuge d'engrais selon la revendication 10, caractérisé en ce que les feux arrière (129) sont prévus sur le caisson de guidage (18, 123, 145).

34. Epandeur centrifuge d'engrais selon la revendication 10, caractérisé par un pare-chocs prévu en avant des caissons de guidage (18, 123) dans la direction de déplacement (111).

35. Epandeur centrifuge d'engrais selon la revendication 26, caractérisé en ce que l'arceau de protection (125) est en forme de pare-chocs pour les caissons de guidage (18, 123).
